# EUROPEAN PATENT APPLICATION

(11) **EP 4 560 738 A1**
(43) Date of publication of application: **28.05.2025**
(21) Application number: 24832130.9
(22) Date of filing: 28.06.2024
(51) Int. Cl.: H01M 4/62, C08F 14/26, H01G 11/38, H01M 4/13, H01M 4/139

(54) **POLYTETRAFLUOROETHYLENE COMPOSITION, BINDER FOR ELECTROCHEMICAL DEVICES, ELECTRODE MIXTURE, ELECTRODE, AND SECONDARY BATTERY**

(30) Priority: 30.06.2023 JP 2023108435
(71) Applicant: DAIKIN INDUSTRIES, LTD., Osaka-shi, Osaka 530-0001 (JP)
(72) Inventor: NISHIMURA, Kenta, Osaka-Shi, Osaka 530-0001 (JP); YAMADA, Takaya, Osaka-Shi, Osaka 530-0001 (JP); YASUDA, Kohei, Osaka-Shi, Osaka 530-0001 (JP); KATO, Taketo, Osaka-Shi, Osaka 530-0001 (JP); INOUE, Ryo, Osaka-Shi, Osaka 530-0001 (JP); YAMAMOTO, Emi, Osaka-Shi, Osaka 530-0001 (JP); TERADA, Junpei, Osaka-Shi, Osaka 530-0001 (JP); YAMANAKA, Taku, Osaka-Shi, Osaka 530-0001 (JP)
(74) Representative: Hoffmann Eitle
(86) International application number: PCT/JP2024/023619
(87) International publication number: WO 2025/005273

(57) **Abstract**

Provided is a polytetrafluoroethylene composition for use in an electrochemical device binder, the polytetrafluoroethylene composition being homogenously mixable with powder components in electrochemical devices and being capable of providing a mixture sheet having excellent strength and excellent flexibility. Also provided are an electrochemical device binder, an electrode mixture, an electrode, and a secondary battery each containing the polytetrafluoroethylene composition. The disclosure relates to a polytetrafluoroethylene composition for use in an electrochemical device binder, the polytetrafluoroethylene composition including polytetrafluoroethylene containing polytetrafluoroethylene particles having a particle size of 1 µm or greater.

## Description

### TECHNICAL FIELD

The disclosure relates to polytetrafluoroethylene compositions, electrochemical device binders, electrode mixtures, electrodes, and secondary batteries.

### BACKGROUND ART

Secondary batteries such as lithium-ion secondary batteries are high-voltage, high-energy-density batteries with low self-discharge and low memory effect and can be made extremely lightweight, and are therefore used in small and portable electric and electronic devices such as laptop PCs, cellular phones, smart phones, tablet PCs, and Ultrabooks, and are also being commercialized as a wide variety of power sources, including in-vehicle power sources for driving automobiles and large power sources for stationary applications. Secondary batteries are now demanded to have even higher energy densities and further improved battery characteristics.

Patent Literature 1 discloses an energy storage device in which at least one of the cathode or the anode includes a polytetrafluoroethylene composite binder material.

Patent Literature Documents 2 to 6 each describe use of polytetrafluoroethylene as a binder for batteries.

Patent Literature 7 discloses the use of a mixture of polytetrafluoroethylene and polyvinylidene fluoride as a binder in batteries.

### CITATION LIST

### - Patent Literature

Patent Literature 1: JP 2017-517862 T
Patent Literature 2: WO 2021/181887 A1
Patent Literature 3: WO 2021/181888 A1
Patent Literature 4: WO 2021/192541 A1
Patent Literature 5: WO 2022/138942 A1
Patent Literature 6: WO 2022/138939 A1
Patent Literature 7: WO 2022/234227 A1

### SUMMARY OF INVENTION

### - Technical Problem

The disclosure aims to provide a polytetrafluoroethylene composition for use in an electrochemical device binder, the polytetrafluoroethylene composition being homogenously mixable with powder components in electrochemical devices and being capable of providing a mixture sheet having excellent strength and excellent flexibility. The disclosure also aims to provide an electrochemical device binder, an electrode mixture, an electrode, and a secondary battery each containing the polytetrafluoroethylene composition.

### - Solution to Problem

The disclosure (1) relates to a polytetrafluoroethylene composition for use in an electrochemical device binder, the polytetrafluoroethylene composition including polytetrafluoroethylene containing polytetrafluoroethylene particles having a particle size of 1 µm or greater.

The disclosure (2) relates to the polytetrafluoroethylene composition according to the disclosure (1), wherein the polytetrafluoroethylene containing polytetrafluoroethylene particles having a particle size of 1 µm or greater is contained in an amount of 1% by mass or more and 70% by mass or less in the polytetrafluoroethylene composition.

The disclosure (3) relates to an electrochemical device binder consisting essentially of a polytetrafluoroethylene composition, the polytetrafluoroethylene composition including polytetrafluoroethylene containing polytetrafluoroethylene particles having a particle size of 1 µm or greater.

The disclosure (4) relates to the electrochemical device binder according to the disclosure (3), wherein the polytetrafluoroethylene containing polytetrafluoroethylene particles having a particle size of 1 µm or greater is non-melt-flowable polytetrafluoroethylene.

The disclosure (5) relates to the electrochemical device binder according to the disclosure (3) or (4), wherein the polytetrafluoroethylene containing polytetrafluoroethylene particles having a particle size of 1 µm or greater is contained in an amount of 1% by mass or more and 70% by mass or less in the polytetrafluoroethylene composition.

The disclosure (6) relates to the electrochemical device binder according to any one of the disclosures (3) to (5), wherein the polytetrafluoroethylene containing polytetrafluoroethylene particles having a particle size of 1 µm or greater is contained in an amount of 1% by mass or more and 50% by mass or less in the polytetrafluoroethylene composition.

The disclosure (7) relates to a polytetrafluoroethylene composition for use in an electrochemical device binder, the polytetrafluoroethylene composition including polytetrafluoroethylene having a specific surface area of 0.5 m²/g or more and less than 7.0 m²/g.

The disclosure (8) relates to the polytetrafluoroethylene composition according to the disclosure (7), wherein the polytetrafluoroethylene composition includes polytetrafluoroethylene having a specific surface area of 1.5 m²/g or more and 3.5 m²/g or less.

The disclosure (9) relates to an electrochemical device binder consisting essentially of a polytetrafluoroethylene composition, the polytetrafluoroethylene composition including polytetrafluoroethylene having a specific surface area of 0.5 m²/g or more and less than 7.0 m²/g.

The disclosure (10) relates to the electrochemical device binder according to the disclosure (9), wherein the polytetrafluoroethylene having a specific surface area of 0.5 m²/g or more and less than 7.0 m²/g is non-melt-flowable polytetrafluoroethylene.

The disclosure (11) relates to the electrochemical device binder according to the disclosure (9) or (10), wherein the polytetrafluoroethylene having a specific surface area of 0.5 m²/g or more and less than 7.0 m²/g is contained in an amount of 1% by mass or more and 70% by mass or less in the polytetrafluoroethylene composition.

The disclosure (12) relates to the electrochemical device binder according to any one of the disclosures (9) to (11), wherein the polytetrafluoroethylene having a specific surface area of 0.5 m²/g or more and less than 7.0 m²/g is contained in an amount of 1% by mass or more and 50% by mass or less in the polytetrafluoroethylene composition.

The disclosure (13) relates to the electrochemical device binder according to any one of the disclosures (9) to (12), wherein the polytetrafluoroethylene composition includes polytetrafluoroethylene having a specific surface area of 1.5 m²/g or more and 3.5 m²/g or less.

The disclosure (14) relates to a polytetrafluoroethylene composition for use in an electrochemical device binder, the polytetrafluoroethylene composition including polytetrafluoroethylene obtained by suspension polymerization.

The disclosure (15) relates to an electrochemical device binder consisting essentially of a polytetrafluoroethylene composition, the polytetrafluoroethylene composition including polytetrafluoroethylene obtained by suspension polymerization.

The disclosure (16) relates to the electrochemical device binder according to the disclosure (15), wherein the polytetrafluoroethylene obtained by suspension polymerization is non-melt-flowable polytetrafluoroethylene.

The disclosure (17) relates to the electrochemical device binder according to the disclosure (15) or (16), wherein the polytetrafluoroethylene obtained by suspension polymerization is contained in an amount of 1% by mass or more and 70% by mass or less in the polytetrafluoroethylene composition.

The disclosure (18) relates to the electrochemical device binder according to any one of the disclosures (15) to (17), wherein the polytetrafluoroethylene obtained by suspension polymerization is contained in an amount of 1% by mass or more and 50% by mass or less in the polytetrafluoroethylene composition.

The disclosure (19) relates to the electrochemical device binder according to any one of the disclosures (3) to (6), (9) to (13), and (15) to (18), wherein the polytetrafluoroethylene composition has an endothermic peak temperature of 333°C or higher.

The disclosure (20) relates to the electrochemical device binder according to any one of the disclosures (3) to (6), (9) to (13), and (15) to (19), wherein the polytetrafluoroethylene composition is in a powder form.

The disclosure (21) relates to the electrochemical device binder according to any one of the disclosures (3) to (6), (9) to (13), and (15) to (20), wherein the polytetrafluoroethylene composition is substantially free from water.

The disclosure (22) relates to the electrochemical device binder according to any one of the disclosures (3) to (6), (9) to (13), and (15) to (21), wherein the polytetrafluoroethylene composition is substantially free from a fluorine-containing compound having a molecular weight of 1000 or less.

The disclosure (23) relates to an electrode mixture containing: an electrode active material; and the polytetrafluoroethylene composition according to the disclosure (1), (2), (7), (8), or (14) or the electrochemical device binder according to any one of the disclosures (3) to (6), (9) to (13), and (15) to (22).

The disclosure (24) relates to the electrode mixture according to the disclosure (23), which is in a sheet form.

The disclosure (25) relates to an electrode including: an electrode active material; a current collector; and the polytetrafluoroethylene-based polymer composition according to the disclosure (1), (2), (7), (8), or (14) or the electrochemical device binder according to any one of the disclosures (3) to (6), (9) to (13), and (15) to (22).

The disclosure (26) relates to a secondary battery including the electrode according to the disclosure (25).

### - Advantageous Effects of Invention

The disclosure can provide a polytetrafluoroethylene composition for use in an electrochemical device binder, the polytetrafluoroethylene composition being homogenously mixable with powder components in electrochemical devices and being capable of providing a mixture sheet having excellent strength and excellent flexibility. The disclosure can also provide an electrochemical device binder, an electrode mixture, an electrode, and a secondary battery each containing the polytetrafluoroethylene composition.

### BRIEF DESCRIPTION OF DRAWINGS

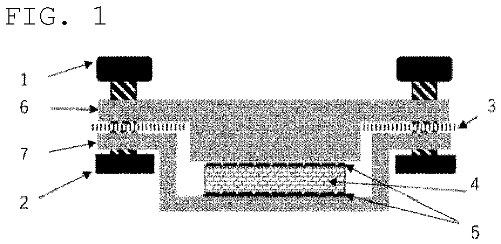

FIG. 1 is a schematic cross-sectional view of a pressure cell used in ion-conductivity measurement of solid electrolyte mixture sheets in EXAMPLES.

### DESCRIPTION OF EMBODIMENTS

The disclosure will be specifically described below.

The disclosure provides a polytetrafluoroethylene (PTFE) composition for use in an electrochemical device binder (hereinafter also referred to as a PTFE composition (1) of the disclosure), the PTFE composition including PTFE containing PTFE particles having a particle size of 1 µm or greater.

The disclosure provides a PTFE composition for use in an electrochemical device binder (hereinafter also referred to as a PTFE composition (2) of the disclosure), the PTFE composition including PTFE having a specific surface area of 0.5 m²/g or more and less than 7.0 m²/g.

The disclosure provides a PTFE composition for use in an electrochemical device binder (hereinafter also referred to as a PTFE composition (3) of the disclosure), the PTFE composition including PTFE obtained by suspension polymerization.

The PTFE compositions (1) to (3) of the disclosure are herein collectively referred to as "PTFE composition of the disclosure", unless otherwise stated.

The PTFE composition of the disclosure containing specific PTFE is less likely to form aggregates with powder components in electrochemical devices, such as electrode active materials and solid electrolytes, even if they are kneaded for a long time. It is homogenously mixable with the powder components. The PTFE composition can provide a mixture sheet having excellent strength and excellent flexibility.

The PTFE composition of the disclosure does not require a large amount of a dispersion medium such as water or an organic solvent when used as a binder and can be combined with a wide range of electrode active materials and solid electrolytes, which is advantageous in terms of the production process. This can reduce the process and cost derived from the use of a dispersion medium.

Moreover, the PTFE composition of the disclosure has excellent binding force to an active material and an electrolyte, which can reduce the amount of the PTFE composition used.

The PTFE composition (1) of the disclosure includes PTFE containing PTFE particles having a particle size of 1 µm or greater. The PTFE has low fibrillation properties. Thus, fibrillation of the PTFE composition containing the PTFE is reduced, and the PTFE composition is less likely to form aggregates with powder components in electrochemical devices, even if they are kneaded for a long time. This can achieve homogeneous mixing with the powder components and provide mixture sheets having improved strength and improved flexibility.

The presence or absence of PTFE particles having a particle size of 1 µm or greater can be determined by measuring the particle sizes of the PTFE particles by scanning electron microscope (SEM) observation. In the SEM observation, the particle size of a PTFE particle is determined by taking an SEM image of the PTFE powder at a magnification of 2000 times and measuring the distance between two horizontal parallel lines sandwiching the particle.

The PTFE preferably contains PTFE particles having a particle size of 5 µm or greater, more preferably contains PTFE particles having a particle size of 10 µm or greater, still more preferably contains PTFE particles having a particle size of 15 µm or greater, furthermore preferably contains PTFE particles having a particle size of 20 µm or greater. The PTFE preferably contains PTFE particles having a particle size of 500 µm or smaller, more preferably contains PTFE particles having a particle size of 400 µm or smaller, still more preferably contains PTFE particles having a particle size of 300 µm or smaller, furthermore preferably contains PTFE particles having a particle size of 200 µm or smaller, and particularly preferably contains PTFE particles having a particle size of 100 µm or smaller.

The PTFE containing PTFE particles having a particle size of 1 µm or greater may be PTFE containing no PTFE particles having a particle size of smaller than 1 µm.

The PTFE containing PTFE particles having a particle size of 1 µm or greater preferably has a median diameter (d50) of 5 µm or greater, more preferably 10 µm or greater, still more preferably 15 µm or greater, further preferably 20 µm or greater, while preferably 500 µm or smaller, more preferably 400 µm or smaller, still more preferably 300 µm or smaller, further preferably 200 µm or smaller, furthermore preferably 100 µm or smaller, particularly preferably 50 µm or smaller.

The median diameter is determined by the following laser diffraction method. This is performed in a dry manner using a HELOS & RODOS system (product name, available from SYMPATEC). The powder to be measured is dispersed by compressed air at a dispersion pressure of 2 bar, and the shadow of the powder to be measured projected by a laser is detected by the measurement sensor unit to calculate the particle size distribution of the powder to be measured and determine the average particle size (particle size at 50% in the cumulative distribution) d50 on a volume basis. The d50 is defined as equivalent to the particle size corresponding to 50% of the cumulative volume in the particle size distribution.

The PTFE containing PTFE particles having a particle size of 1 µm or greater is preferably non-melt-flowable PTFE.

The term "non-melt-flowable" herein means that the melt flow rate (MFR) is lower than 0.25 g/10 min, preferably lower than 0.10 g/10 min, more preferably 0.05 g/10 min or lower, still more preferably 0.01 g/10 min or lower.

The MFR is a value obtained in conformity with ASTM D1238 using a melt indexer, as the mass (g/10 min) of a polymer flowing out of a nozzle (inner size: 2.095 mm, length: 8 mm) per 10 minutes at 372°C and a load of 5 kg.

To achieve further homogeneous mixing with powder components in electrochemical devices and to provide mixture sheets with higher strength and higher flexibility, the PTFE containing PTFE particles having a particle size of 1 µm or greater preferably has a specific surface area of 0.5 m²/g or more, more preferably 1.0 m²/g or more, still more preferably 1.5 m²/g or more, while preferably less than 7.0 m²/g, more preferably 6.5 m²/g or less, still more preferably 6.0 m²/g or less, further preferably 5.5 m²/g or less, furthermore preferably 5.0 m²/g or less, furthermore preferably 4.5 m²/g or less, furthermore preferably 4.0 m²/g or less, particularly preferably 3.5 m²/g or less.

The specific surface area can be measured by the BET method in accordance with JIS Z 8830 using a gas mixture of 30% nitrogen and 70% helium as a carrier gas and liquid nitrogen for cooling.

In the PTFE composition (1) of the disclosure, to achieve further homogeneous mixing with powder components in electrochemical devices and to provide mixture sheets with higher strength and higher flexibility, the amount of PTFE containing PTFE particles having a particle size of 1 µm or greater is preferably 1% by mass or more, more preferably 3% by mass or more, still more preferably 5% by mass or more, particularly preferably 10% by mass or more, and may be 70% by mass or less, preferably 50% by mass or less, more preferably 45% by mass or less, still more preferably 40% by mass or less, further preferably 35% by mass or less, furthermore preferably 30% by mass or less, particularly preferably 25% by mass or less, in the PTFE composition.

The PTFE containing PTFE particles having a particle size of 1 µm or greater can be produced by suspension polymerization. The particle size of PTFE obtained by suspension polymerization is usually larger than that of PTFE obtained by emulsion polymerization.

Herein, suspension polymerization refers to polymerization performed in an aqueous medium in the absence of a surfactant or in the presence of 2000 ppm by mass or less of a surfactant relative to the aqueous medium. The suspension polymerization is described in detail later.

As described later, PTFE particles produced by suspension polymerization typically have a scaly particle shape, and can be visually distinguished from secondary particles, which are PTFE particles produced by emulsion polymerization.

The PTFE particles having a particle size of 1 µm or greater are usually scaly PTFE particles.

The PTFE particles having a particle size of 1 µm or greater preferably have a diameter to thickness ratio (diameter/thickness) of 3.0 or more, more preferably 4.0 or more, still more preferably 5.0 or more, while preferably 20 or less, more preferably 15 or less, still more preferably 10 or less.

The ratio is determined from the diameter and thickness of PTFE particles obtained by scanning electron microscope (SEM) observation and image processing. The diameter to thickness ratio is determined for 20 particles, the values are averaged, and this average was taken as the diameter to thickness ratio.

The PTFE composition (1) of the disclosure preferably further includes PTFE containing no PTFE particles having a particle size of 1 µm or greater. The mass ratio of PTFE containing PTFE particles having a particle size of 1 µm or greater to PTFE containing no PTFE particles having a particle size of 1 µm or greater is preferably 1/99 or more, more preferably 3/97 or more, still more preferably 5/95 or more, while preferably 50/50 or less, more preferably 45/55 or less, still more preferably 40/60 or less, further preferably 35/65 or less, furthermore preferably 30/70 or less, particularly preferably 25/75 or less.

The PTFE containing no PTFE particles having a particle size of 1 µm or greater can be produced by emulsion polymerization. The emulsion polymerization is described in detail later.

The PTFE composition (2) of the disclosure includes PTFE having a specific surface area of 0.5 m²/g or more and less than 7.0 m²/g. The PTFE having a specific surface area of 0.5 m²/g or more and less than 7.0 m²/g has low fibrillation properties. Thus, fibrillation of the PTFE composition containing the PTFE is reduced, and the PTFE composition is less likely to form aggregates with powder components in electrochemical devices, even if they are kneaded for a long time. This can achieve homogeneous mixing with the powder components and provide mixture sheets having improved strength and improved flexibility.

The specific surface area is preferably 1.0 m²/g or more, more preferably 1.5 m²/g or more, while preferably 6.5 m²/g or less, more preferably 6.0 m²/g or less, still more preferably 5.5 m²/g or less, further preferably 5.0 m²/g or less, furthermore preferably 4.5 m²/g or less, furthermore preferably 4.0 m²/g or less, particularly preferably 3.5 m²/g or less.

The PTFE having a specific surface area of 0.5 m²/g or more and less than 7.0 m²/g is preferably non-melt-flowable PTFE.

To achieve further homogeneous mixing with powder components in electrochemical devices and to provide mixture sheets with higher strength and higher flexibility, the PTFE having a specific surface area of 0.5 m²/g or more and less than 7.0 m²/g preferably contains PTFE particles having a particle size of 1 µm or greater, more preferably contains PTFE particles having a particle size of 5 µm or greater, still more preferably contains PTFE particles having a particle size of 10 µm or greater, further preferably contains PTFE particles having a particle size of 15 µm or greater, particularly preferably contains PTFE particles having a particle size of 20 µm or greater, while preferably contains PTFE particles having a particle size of 500 µm or smaller, more preferably contains PTFE particles having a particle size of 400 µm or smaller, still more preferably contains PTFE particles having a particle size of 300 µm or smaller, further preferably contains PTFE particles having a particle size of 200 µm or smaller, particularly preferably contains PTFE particles having a particle size of 100 µm or smaller.

The PTFE having a specific surface area of 0.5 m²/g or more and less than 7.0 m²/g may be PTFE containing no PTFE particles having a particle size of smaller than 1 µm.

The PTFE having a specific surface area of 0.5 m²/g or more and less than 7.0 m²/g preferably has a median diameter (d50) of 5 µm or greater, more preferably 10 µm or greater, still more preferably 15 µm or greater, further preferably 20 µm or greater, while preferably 500 µm or smaller, more preferably 400 µm or smaller, still more preferably 300 µm or smaller, further preferably 200 µm or smaller, furthermore preferably 100 µm or smaller, particularly preferably 50 µm or smaller.

In the PTFE composition (2) of the disclosure, to achieve further homogeneous mixing with powder components in electrochemical devices and to provide mixture sheets with higher strength and higher flexibility, the amount of PTFE having a specific surface area of 0.5 m²/g or more and less than 7.0 m²/g is preferably 1% by mass or more, more preferably 3% by mass or more, still more preferably 5% by mass or more, particularly preferably 10% by mass or more, and may be 70% by mass or less, preferably 50% by mass or less, more preferably 45% by mass or less, still more preferably 40% by mass or less, further preferably 35% by mass or less, furthermore preferably 30% by mass or less, particularly preferably 25% by mass or less, in the PTFE composition.

The amount of PTFE having a specific surface area of 0.5 m²/g or more and less than 7.0 m²/g is equal to the amount of PTFE containing PTFE particles having a particle size of 1 µm or greater.

The PTFE having a specific surface area of 0.5 m²/g or more and less than 7.0 m²/g can be produced by suspension polymerization. The specific surface area of PTFE obtained by suspension polymerization is usually less than that of PTFE obtained by emulsion polymerization.

The PTFE composition (2) of the disclosure preferably further includes PTFE having a specific surface area of 7.0 m²/g or more. The mass ratio of PTFE having a specific surface area of 0.5 m²/g or more and less than 7.0 m²/g to PTFE having a specific surface area of 7.0 m²/g or more is preferably 1/99 or more, more preferably 3/97 or more, still more preferably 5/95 or more, while preferably 50/50 or less, more preferably 45/55 or less, still more preferably 40/60 or less, further preferably 35/65 or less, furthermore preferably 30/70 or less, particularly preferably 25/75 or less.

The PTFE having a specific surface area of 7.0 m²/g or more can be produced by emulsion polymerization.

The PTFE composition (3) of the disclosure includes PTFE obtained by suspension polymerization. The PTFE obtained by suspension polymerization has low fibrillation properties. Thus, fibrillation of the PTFE composition containing the PTFE is reduced, and the PTFE composition is less likely to form aggregates with powder components in electrochemical devices, even if they are kneaded for a long time. This can achieve homogeneous mixing with the powder components and provide mixture sheets having improved strength and improved flexibility.

The PTFE obtained by suspension polymerization is preferably non-melt-flowable PTFE.

To achieve further homogeneous mixing with powder components in electrochemical devices and to provide mixture sheets with higher strength and higher flexibility, the PTFE obtained by suspension polymerization preferably contains PTFE particles having a particle size of 1 µm or greater, more preferably contains PTFE particles having a particle size of 5 µm or greater, still more preferably contains PTFE particles having a particle size of 10 µm or greater, further preferably contains PTFE particles having a particle size of 15 µm or greater, particularly preferably contains PTFE particles having a particle size of 20 µm or greater, while preferably contains PTFE particles having a particle size of 500 µm or smaller, more preferably contains PTFE particles having a particle size of 400 µm or smaller, still more preferably contains PTFE particles having a particle size of 300 µm or smaller, further preferably contains PTFE particles having a particle size of 200 µm or smaller, particularly preferably contains PTFE particles having a particle size of 100 µm or smaller.

The PTFE obtained by suspension polymerization may be PTFE containing no PTFE particles having a particle size of smaller than 1 µm.

The PTFE obtained by suspension polymerization has a median diameter (d50) of preferably 5 µm or greater, more preferably 10 µm or greater, still more preferably 15 µm or greater, further preferably 20 µm or greater, while preferably 500 µm or smaller, more preferably 400 µm or smaller, still more preferably 300 µm or smaller, further preferably 200 µm or smaller, furthermore preferably 100 µm or smaller, particularly preferably 50 µm or smaller.

To achieve further homogeneous mixing with powder components in electrochemical devices and to provide mixture sheets with higher strength and higher flexibility, the PTFE obtained by suspension polymerization preferably has a specific surface area of 0.5 m²/g or more, more preferably 1.0 m²/g or more, still more preferably 1.5 m²/g or more, while preferably less than 7.0 m²/g, more preferably 6.5 m²/g or less, still more preferably 6.0 m²/g or less, further preferably 5.5 m²/g or less, furthermore preferably 5.0 m²/g or less, furthermore preferably 4.5 m²/g or less, furthermore preferably 4.0 m²/g or less, particularly preferably 3.5 m²/g or less.

In the PTFE composition (3) of the disclosure, to achieve further homogeneous mixing with powder components in electrochemical devices and to provide mixture sheets with higher strength and higher flexibility, the amount of PTFE obtained by suspension polymerization is preferably 1% by mass or more, more preferably 3% by mass or more, still more preferably 5% by mass or more, particularly preferably 10% by mass or more, and may be 70% by mass or less, preferably 50% by mass or less, more preferably 45% by mass or less, still more preferably 40% by mass or less, further preferably 35% by mass or less, furthermore preferably 30% by mass or less, particularly preferably 25% by mass or less, in the PTFE composition.

The amount of PTFE obtained by suspension polymerization is equal to the amount of PTFE containing PTFE particles having a particle size of 1 µm or greater and also equal to the amount of PTFE having a specific surface area of 0.5 m²/g or more and less than 7.0 m²/g.

The PTFE composition (3) of the disclosure preferably further includes PTFE obtained by emulsion polymerization. The mass ratio of PTFE obtained by suspension polymerization to PTFE obtained by emulsion polymerization is preferably 1/99 or more, more preferably 3/97 or more, still more preferably 5/95 or more, while preferably 50/50 or less, more preferably 45/55 or less, still more preferably 40/60 or less, further preferably 35/65 or less, furthermore preferably 30/70 or less, particularly preferably 25/75 or less.

The PTFE composition of the disclosure preferably consists essentially of PTFE (including PTFE other than the above-described specific PTFEs). This allows remarkable exertion of the effect attributable to the PTFE. The phrase "consists essentially of PTFE" means that the amount of the PTFE is 95.0% by mass or more in the PTFE composition.

The amount of the PTFE is preferably 98.0% by mass or more, more preferably 99.0% by mass or more, still more preferably 99.5% by mass or more, particularly preferably 99.9% by mass or more, most preferably 99.95% by mass or more in the PTFE composition.

The PTFE composition of the disclosure also preferably consists of the PTFE.

In the disclosure, the PTFE may include a homopolymer of tetrafluoroethylene (TFE) or modified PTFE containing a polymerized unit based on TFE (TFE unit) and a polymerized unit based on a modifying monomer copolymerizable with TFE (hereinafter, also referred to as a "modifying monomer unit").

The TFE homopolymer refers to a polymer in which the amount of a modifying monomer unit in all polymerized units is less than 0.0001% by mass.

The modified PTFE may contain 99.0% by mass or more of a TFE unit and 1.0% by mass or less of a modifying monomer unit. The modified PTFE may consist of the TFE unit and the modifying monomer unit.

To achieve further homogeneous mixing with powder components in electrochemical devices and to provide mixture sheets with higher strength and higher flexibility, the modified PTFE preferably contains the modifying monomer unit in an amount falling within a range of 0.0001 to 1.0% by mass in all polymerized units. The lower limit of the amount of the modifying monomer unit is more preferably 0.001% by mass, still more preferably 0.010% by mass, further preferably 0.015% by mass, particularly preferably 0.020% by mass. The upper limit of the amount of the modifying monomer unit is preferably 0.80% by mass, more preferably 0.60% by mass, still more preferably 0.50% by mass, further preferably 0.40% by mass, furthermore preferably 0.30% by mass, particularly preferably 0.20% by mass.

The modifying monomer unit herein means a moiety that is part of the molecular structure of PTFE and is derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include perfluoroolefins such as hexafluoropropylene (HFP); hydrogen-containing fluoroolefins such as trifluoroethylene and vinylidene fluoride (VDF); perhaloolefins such as chlorotrifluoroethylene (CTFE); perfluorovinyl ether; perfluoroallyl ether; a (perfluoroalkyl)ethylene; and ethylene. One modifying monomer may be used or a plurality of modifying monomers may be used.

Examples of the perfluorovinyl ether include, but are not limited to, unsaturated perfluoro compounds represented by the following formula (A):

CF₂=CF-ORf¹ (A)

wherein Rf¹ is a perfluoroorganic group. The "perfluoroorganic group" herein means an organic group in which all hydrogen atoms bonded to any carbon atom are replaced by fluorine atoms. The perfluoroorganic group may contain ether oxygen.

An example of the perfluorovinyl ether is a perfluoro(alkyl vinyl ether) (PAVE) represented by the formula (A) wherein Rf¹ is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether include a compound represented by the formula (A) wherein Rf¹ is a C4-C9 perfluoro(alkoxyalkyl) group, a compound represented by the formula (A) wherein Rf¹ is a group represented by the following formula: 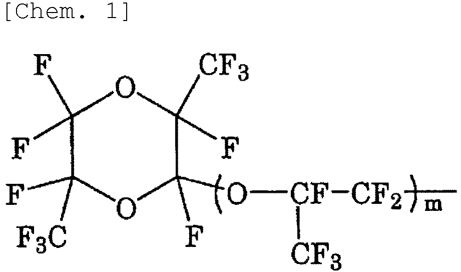 (wherein m is 0 or an integer of 1 to 4), and a compound represented by the formula (A) wherein Rf¹ is a group represented by the following formula: 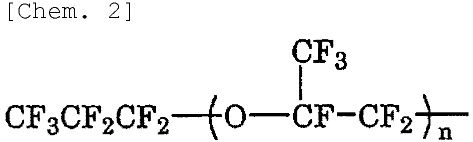 (wherein n is an integer of 1 to 4.)

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

CF₂=CF-CF₂-ORf² (B)

wherein Rf² is a perfluoroorganic group.

Rf² is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

The modifying monomer is preferably a compound represented by the following formula (I):

CX¹X²=CX³X⁴ (I)

wherein X¹ to X³ are each independently H or F and X⁴ is F, Cl, Rf, or O-Rf, where Rf is a perfluoroorganic group.

Rf in the formula (I) is preferably a C1-C10 perfluoroalkyl group, more preferably a C1-C5 perfluoroalkyl group, still more preferably a C1-C4 perfluoroalkyl group.

To achieve further homogeneous mixing with powder components in electrochemical devices and to provide mixture sheets with higher strength and higher flexibility, the modifying monomer is preferably at least one selected from the group consisting of CTFE, HFP, perfluoro(methyl vinyl ether) (PMVE), perfluoro(propyl vinyl ether) (PPVE), PFBE, and VDF, more preferably at least one selected from the group consisting of CTFE, HFP, PMVE, and PPVE, still more preferably at least one selected from the group consisting of CTFE, HFP, and PPVE, particularly preferably at least one selected from the group consisting of PPVE and HFP.

The PTFE may have a core-shell structure. An example of the PTFE having a core-shell structure is a modified PTFE including a core of high-molecular-weight PTFE and a shell of lower-molecular-weight PTFE or modified PTFE in a particle. An example of such a modified PTFE is a PTFE disclosed in JP 2005-527652 T.

To achieve further homogeneous mixing with powder components in electrochemical devices and to provide mixture sheets with higher strength and higher flexibility, the PTFE composition of the disclosure preferably has an endothermic peak temperature of 333°C or higher, more preferably 335°C or higher, still more preferably 337°C or higher, while preferably 350°C or lower, more preferably 346°C or lower.

The endothermic peak temperature is the temperature corresponding to the minimum point on a heat-of-fusion curve obtained by differential scanning calorimetry (DSC) at a temperature-increasing rate of 10°C/min on a PTFE composition that has no history of being heated to 300°C or higher. When two or more minimum points are present in one melting peak, the temperature corresponding to the smallest value is defined as an endothermic peak temperature.

The PTFE composition of the disclosure is preferably substantially free from water. This can reduce or prevent gas generation and deterioration of the electrochemical device properties. Moreover, the electrode active material or solid electrolyte to be combined can be selected from a wide range of selections, which is advantageous in terms of the production process. The phrase "substantially free from water" means that the water content of the PTFE composition is 0.010% by mass or less.

The water content is preferably 0.005% by mass or less, more preferably 0.003% by mass or less, still more preferably 0.002% by mass or less, further preferably 0.001% by mass or less.

The water content is determined by the following method.

The mass of the PTFE composition is weighed before and after heating at 150°C for two hours, and the water content is calculated by the following equation. The sample is taken three times and this calculation is performed for each sample; the values are then averaged and this average is taken as the water content. Water content (% by mass) = [(mass (g) of PTFE composition before heating) - (mass (g) of PTFE composition after heating) ]/(mass (g) of PTFE composition before heating) × 100

The PTFE composition of the disclosure is preferably substantially free from a fluorine-containing compound having a molecular weight of 1000 or less. The phrase "substantially free from a fluorine-containing compound" means that the amount of the fluorine-containing compound is 25 ppb by mass or less in the PTFE composition.

The amount of the fluorine-containing compound is preferably 20 ppb by mass or less, more preferably 15 ppb by mass or less, still more preferably 10 ppb by mass or less, further preferably less than 10 ppb by mass, further preferably 1 ppb by mass or less, further preferably less than 1 ppb by mass, particularly preferably below the lower limit of quantitation. The lower limit may be, but is not limited to, an amount below the lower limit of quantitation.

The amount of the fluorine-containing compound having a molecular weight of 1000 or less is determined by the following method.

A 1-g portion of a sample weighed is combined with 10 g (12.6 mL) of methanol, followed by ultrasonication for 60 minutes, whereby an extract is obtained. The resulting extract is appropriately concentrated by nitrogen purge, and the fluorine-containing compound in the concentrated extract is subjected to a LC/MS/MS assay. Molecular weight information is extracted from the LC/MS spectrum obtained, and is checked for consistency with the structural formulas of candidate fluorine-containing compounds. Aqueous solutions of a standard substance at five or more different levels of amount are prepared, and the aqueous solutions of the respective amounts are subjected to LC/MS analysis. The relation between the amount and the area relative to the amount is plotted, so that a calibration curve is drawn. Based on the resulting calibration curve, the area of the fluorine-containing compound in the extract in the LC/MS chromatogram is converted to the amount of the fluorine-containing compound.

The lower limit of quantitation in this determination method is 10 ppb by mass.

Examples of the fluorine-containing compound having a molecular weight of 1000 or less include a fluorine-containing compound containing a hydrophilic group having a molecular weight of 1000 g/mol or less. The molecular weight of the fluorine-containing compound is preferably 800 or less, more preferably 500 or less.

Polymerized particles obtained by polymerization performed in the presence of a fluorine-containing surfactant usually contain the fluorine-containing surfactant in addition to PTFE. The fluorine-containing surfactant herein is used in polymerization.

The fluorine-containing compound having a molecular weight of 1000 or less may be a compound that is not added in polymerization, for example, a compound that is produced as a by-product during polymerization.

When containing an anionic portion and a cationic portion, the fluorine-containing compound having a molecular weight of 1000 or less refers to a fluorine-containing compound in which the anionic portion has a molecular weight of 1000 or less. The fluorine-containing compound having a molecular weight of 1000 or less does not include PTFE.

The hydrophilic group may be, for example, -COOM, - SO₂M, or -SO₃M, and examples include anionic groups such as -COOM and -SO₃M wherein M is H, a metal atom, NR¹₄, imidazolium optionally containing a substituent, pyridinium optionally containing a substituent, or phosphonium optionally containing a substituent; and R¹ is H or an organic group.

The fluorine-containing surfactant may also be a fluorine-containing surfactant in which the anionic portion has a molecular weight of 1000 or less (fluorine-containing anionic surfactant). The "anionic portion" means a portion excluding the cation in the fluorine-containing surfactant. For example, in the case of F(CF₂)ₙ₁COOM, the anionic portion refers to the portion "F(CF₂)ₙ₁COO".

Examples of the fluorine-containing anionic surfactant include a compound represented by the following formula (N⁰):

Xⁿ⁰-Rfⁿ⁰-Y⁰ (N⁰)

wherein Xⁿ⁰ is H, Cl, or F; Rfⁿ⁰ is a C3-C20 linear, branched, or cyclic alkylene group in which any or all of Hs are replaced by F, where the alkylene group optionally contains one or more ether bonds with any of Hs are optionally replaced by Cl; and Y⁰ is an anionic group.

The anionic group for Y⁰ may be -COOM, -SO₂M, or - SO₃M, and may be -COOM or -SO₃M.

M is H, a metal atom, NR¹₄, imidazolium optionally containing a substituent, pyridinium optionally containing a substituent, or phosphonium optionally containing a substituent, where R¹ is H or an organic group.

Examples of the metal atom include alkali metals (Group 1) and alkaline earth metals (Group 2), such as Na, K, and Li.

R¹ may be H or a C1-C10 organic group, or may be H or a C1-C4 organic group, or may be H or a C1-C4 alkyl group.

M may be H, a metal atom, or NR¹₄, or may be H, an alkali metal (Group 1), an alkaline earth metal (Group 2), or NR¹₄, or may be H, Na, K, Li, or NH₄.

In Rfⁿ⁰, 50% or more of H atoms may be replaced by fluorine.

The fluorine-containing surfactant may be a single fluorine-containing surfactant or a mixture containing two or more fluorine-containing surfactants.

Examples of the fluorine-containing surfactant include compounds represented by the following formulas. The fluorine-containing surfactant may be a mixture of any of these compounds:

F (CF₂)₇COOM,

F (CF₂)₅COOM,

H (CF₂)₆COOM,

H (CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF(CF₃)CF₂OCF₂COOM,

CF₂ClCF(CF₃)OCF₂CF(CF₃)OCF₂COOM,

and 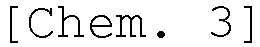 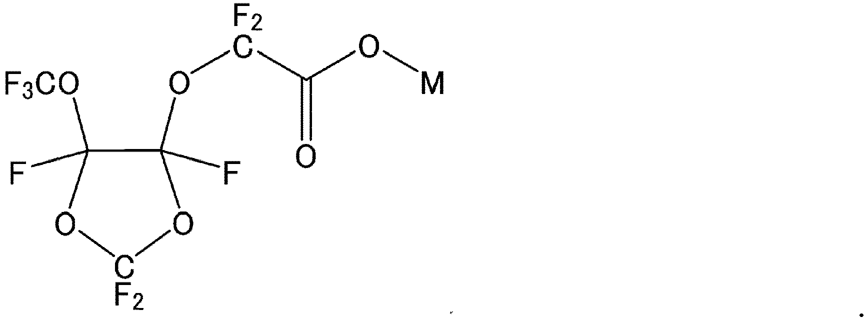 In each formula, M is H, a metal atom, NR¹₄, imidazolium optionally containing a substituent, pyridinium optionally containing a substituent, or phosphonium optionally containing a substituent, where R¹ is H or an organic group.

The PTFE composition of the disclosure is preferably substantially free from any of the fluorine-containing compounds represented by the above formulas.

In each of the above formulas, M may be H, a metal atom, or NR¹₄, may be H, an alkali metal (Group 1), an alkaline earth metal (Group 2), or NR¹₄, or may be H, Na, K, Li, or NH₄.

R¹ may be H or a C₁₋₁₀ organic group, may be H or a C₁₋₄ organic group, or may be H or a C₁₋₄ alkyl group.

The PTFE composition of the disclosure substantially free from any of the fluorine-containing compounds represented by the above formulas can further reduce or prevent gas generation and deterioration of the electrochemical device properties.

The phrase "substantially free from any of the fluorine-containing compounds represented by the above formulas" means that the amount of any of the fluorine-containing compounds is 25 ppb by mass or less in the PTFE composition.

The amount of the fluorine-containing compound is preferably 20 ppb by mass or less, more preferably 15 ppb by mass or less, still more preferably 10 ppb by mass or less, further preferably less than 10 ppb by mass, further preferably 1 ppb by mass or less, further preferably less than 1 ppb by mass, particularly preferably below the lower limit of quantitation. The lower limit may be, but is not limited to, an amount below the lower limit of quantitation.

The PTFE composition of the disclosure is also preferably substantially free from a fluorine-containing compound represented by the following formula:

[Cₙ₋₁F₂ₙ₋₁COO⁻]M⁺

wherein n is an integer of 9 to 14, preferably an integer of 9 to 12, and M⁺ is a cation. This can further reduce or prevent gas generation and deterioration of the electrochemical device properties.

M of the cation M⁺ in the formula is the defined as described for M.

The phrase "substantially free from a fluorine-containing compound represented by the formula" means that the amount of the fluorine-containing compound is 25 ppb by mass or less in the PTFE composition.

The amount of the fluorine-containing compound is preferably 20 ppb by mass or less, more preferably 15 ppb by mass or less, still more preferably 10 ppb by mass or less, further preferably less than 10 ppb by mass, further preferably 1 ppb by mass or less, further preferably less than 1 ppb by mass, particularly preferably below the lower limit of quantitation. The lower limit may be, but is not limited to, an amount below the lower limit of quantitation.

The PTFE composition of the disclosure preferably has non-melt secondary processibility. The non-melt secondary processibility refers to a property of a polymer with which the melt flow rate is non-measurable at a temperature higher than the melting point in conformity with ASTM D1238 and D2116, in other words, a property with which the polymer does not easily flow even within a melting point range.

To achieve further homogeneous mixing with powder components in electrochemical devices and to provide mixture sheets with higher strength and higher flexibility, the PTFE composition of the disclosure has a standard specific gravity (SSG) of preferably 2.200 or less, more preferably 2.190 or less, still more preferably 2.180 or less, further preferably 2.175 or less, while preferably 2.130 or more, more preferably 2.140 or more, still more preferably 2.150 or more.

The SSG is determined by the water displacement method in conformity with ASTM D792 using a sample molded in conformity with ASTM D4895 89.

To achieve further homogeneous mixing with powder components in electrochemical devices and to provide mixture sheets with higher strength and higher flexibility, the PTFE composition of the disclosure is preferably paste-extrudable.

Whether or not the PTFE composition is paste-extrudable is confirmed by the following method.

An amount of 60 g of the PTFE composition and 12.3 g of a hydrocarbon oil (trade name: Isopar G (registered trademark), ExxonMobil Corp.) as an extrusion aid are mixed for three minutes in a polyethylene container. A cylinder of an extruder is filled with the resulting mixture at room temperature (25 ± 2°C). A load of 0.47 MPa is applied to a piston inserted into the cylinder and maintained for one minute. Then, the mixture is extruded through an orifice at a ram speed of 20 mm/min. The ratio of the cross-sectional area of the cylinder to the cross-sectional area of the orifice is 100. In the extrusion, the case where the beading broke and could not be extruded continuously is determined to be non-extrudable, whereas the case where the beading did not break and could be extruded continuously is determined to be extrudable.

The PTFE composition of the disclosure may be in any form, and is preferably in the form of powder so as to be mixed with an electrode active material or a solid electrolyte without a large amount of dispersion medium.

The PTFE composition may be in a form other than powder, such as a dispersion.

The PTFE composition of the disclosure may have an average secondary particle size of 350 µm or greater, preferably 400 µm or greater, more preferably 450 µm or greater, while preferably 1000 µm or smaller, more preferably 900 µm or smaller, still more preferably 800 µm or smaller, further preferably 700 µm or smaller, particularly preferably 600 µm or smaller.

The average secondary particle size is measured in conformity with JIS K 6891.

To achieve excellent handleability, the PTFE composition of the disclosure preferably has an apparent density of 0.40 g/ml or higher, more preferably 0.43 g/ml or higher. The upper limit may be, but is not limited to, 0.70 g/ml.

The apparent density is determined in conformity with JIS K 6892.

The PTFE composition of the disclosure may be produced, for example, by mixing PTFE obtained by emulsion polymerization and PTFE obtained by suspension polymerization. The mixing may be performed by any method. PTFE all in a powder form may be mixed, or PTFE in the form of an aqueous dispersion and PTFE in a powder form may be mixed.

The PTFE composition of the disclosure can be suitably produced by, for example, a production method including: a step (A) of mixing a PTFE aqueous dispersion obtained by emulsion polymerization and a PTFE powder obtained by suspension polymerization; a step (B) of coagulating the aqueous dispersion after the mixing to prepare a wet powder; and a step (C) of drying the wet powder.

The aqueous dispersion in the step (A) can be produced by emulsion polymerization.

The emulsion polymerization can be performed by a known method. For example, emulsion polymerization of monomers (TFE and optionally a modifying monomer) required to constitute the PTFE is performed in an aqueous medium in the presence of a fluorine-containing anionic surfactant and a polymerization initiator, whereby an aqueous dispersion containing particles (primary particles) of the PTFE can be obtained. In the emulsion polymerization, additives such as a chain transfer agent, a buffer, a pH adjuster, a stabilization aid, a dispersion stabilizer, and a radical scavenger may be used as appropriate.

The aqueous dispersion may contain at least one fluorine-containing compound described above.

The emulsion polymerization can be performed, for example, in an aqueous medium in the presence of a fluorine-containing anionic surfactant and a polymerization initiator.

The emulsion polymerization may be performed by, for example, charging a polymerization reactor with an aqueous medium, the fluorine-containing anionic surfactant, a monomer, and optionally other additives, stirring the contents in the reactor, maintaining the reactor at a predetermined polymerization temperature, and then adding a predetermined amount of a polymerization initiator to start the polymerization reaction. After the initiation of the polymerization reaction, the components such as the monomers, the polymerization initiator, a chain transfer agent, and the surfactant may additionally be added depending on the purpose.

The polymerization initiator may be any initiator capable of generating radicals within the polymerization temperature range, and any known oil-soluble and/or water-soluble polymerization initiator may be used. The polymerization initiator may be combined with a reducing agent, for example, into the form of a redox agent, which initiates the polymerization. The concentration of the polymerization initiator is appropriately determined in accordance with the type of the monomer, the target molecular weight of the PTFE, and the reaction rate.

The polymerization initiator used may be an oil-soluble radical polymerization initiator or a water-soluble radical polymerization initiator.

The oil-soluble radical polymerization initiator may be a known oil-soluble peroxide. Typical examples thereof include dialkyl peroxycarbonates such as diisopropyl peroxydicarbonate and di-sec-butyl peroxydicarbonate, peroxy esters such as t-butyl peroxyisobutyrate and t-butyl peroxypivalate, dialkyl peroxides such as di-t-butyl peroxide, as well as di(perfluoroacyl) or di(fluorochloroacyl) peroxides such as di(ω-hydro-dodecafluoroheptanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The water-soluble radical polymerization initiator may be a known water-soluble peroxide. Examples thereof include ammonium salts, potassium salts, and sodium salts of any of persulfuric acid, perboric acid, perchloric acid, perphosphoric acid, and percarbonic acid, t-butyl permaleate, t-butyl hydroperoxide, and disuccinic acid peroxide. Preferred among these are ammonium persulfate and disuccinic acid peroxide. The initiator may also contain a reducing agent such as a sulfite or a sulfurous acid salt. The amount thereof used may be 0.1 to 20 times the amount of the peroxide.

The water-soluble radical polymerization initiator may be added in any amount and is added in an amount equal to or more than the amount that does not significantly decrease the polymerization rate (e.g., concentration of several parts per million relative to water) in one lot in an early stage of polymerization or intermittently or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces.

To easily achieve the physical properties described above, the amount of the polymerization initiator added is preferably an amount equivalent to 0.1 ppm or more, more preferably an amount equivalent to 1.0 ppm or more, while it is preferably an amount equivalent to 100 ppm or less, more preferably an amount equivalent to 10 ppm or less in the aqueous medium.

For example, in the case of polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, ammonium cerium nitrate, and a bromate. Examples of the reducing agent include a sulfite, bisulfite, bromate, diimine, and oxalic acid. Examples of the persulfate include ammonium persulfate and potassium persulfate. Examples of the sulfite include sodium sulfite and ammonium sulfite. To increase the decomposition rate of the initiator, the combination of the redox initiator is also preferably combined with a copper salt or an iron salt. An example of the copper salt is copper(II) sulfate and an example of the iron salt is iron(II) sulfate.

The oxidizing agent of the redox initiator is preferably permanganic acid or its salt, a persulfate, manganese triacetate, a cerium(IV) salt, or bromic acid or its salt. The reducing agent of the redox initiator is preferably a dicarboxylic acid or its salt, or a diimine.

More preferably, the oxidizing agent is permanganic acid or its salt, a persulfate, or bromic acid or its salt, and the reducing agent is a dicarboxylic acid or its salt.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, an oxidizing agent or a reducing agent may be fed to a polymerization vessel in advance, and the other may be continuously or intermittently added to start polymerization. For example, in the case of using potassium permanganate/oxalic acid, preferably, oxalic acid is fed to a polymerization vessel and potassium permanganate is continuously added thereto.

In the redox initiator herein, "potassium permanganate/oxalic acid" refers to a combination of potassium permanganate and oxalic acid. The same applies to other compounds.

The redox initiator is particularly preferably a combination of an oxidizing agent in the form of a salt and a reducing agent in the form of a salt.

For example, the oxidizing agent in the form of a salt more preferably includes at least one selected from the group consisting of persulfates, permanganates, cerium(IV) salts, and bromates, still more preferably a permanganate, particularly preferably potassium permanganate.

The reducing agent in the form of a salt more preferably includes at least one selected from the group consisting of oxalates, malonates, succinates, glutarates, and bromates, still more preferably an oxalate, particularly preferably ammonium oxalate.

Specifically, the redox initiator preferably includes at least one selected from the group consisting of potassium permanganate/oxalic acid, potassium permanganate/ammonium oxalate, potassium bromate/ammonium sulfite, manganese triacetate/ammonium oxalate, and ammonium cerium nitrate/ammonium oxalate, more preferably at least one selected from the group consisting of potassium permanganate/oxalic acid, potassium permanganate/ammonium oxalate, potassium bromate/ammonium sulfite, and ammonium cerium nitrate/ammonium oxalate, still more preferably potassium permanganate/oxalic acid.

When a redox initiator is used, the oxidizing agent and the reducing agent may be added all at once at the initial stage of polymerization, or the reducing agent may be added all at once at the initial stage of polymerization and the oxidizing agent may be added continuously. Alternatively, the oxidizing agent may be added all at once at the initial stage of polymerization and the reducing agent may be added continuously, or both the oxidizing agent and the reducing agent may be added continuously.

When one agent of the redox polymerization initiator is added in an early stage of polymerization and the other agent is added continuously, it is preferable to gradually slow down the addition speed in order to obtain PTFE with a low SSG. Moreover, addition is preferably stopped in the middle of polymerization. The addition is preferably stopped before 20% to 40% by mass of the total TFE to be consumed in the polymerization reaction is consumed.

In use of a redox initiator as a polymerization initiator, the amount of the oxidizing agent added is preferably 0.1 ppm or more, more preferably 0.3 ppm or more, still more preferably 0.5 ppm or more, further preferably 1 ppm or more, particularly preferably 5 ppm or more, more particularly preferably 10 ppm or more, while preferably 10000 ppm or less, more preferably 1000 ppm or less, still more preferably 100 ppm or less, further preferably 50 ppm or less in the aqueous medium. The amount of the reducing agent added is preferably 0.1 ppm or more, more preferably 1.0 ppm or more, still more preferably 3 ppm or more, further preferably 5 ppm or more, particularly preferably 10 ppm or more, while preferably 10000 ppm or less, more preferably 1000 ppm or less, still more preferably 100 ppm or less, further preferably 50 ppm or less.

In use of a redox initiator in the emulsion polymerization, the polymerization temperature is preferably 100°C or lower, more preferably 95°C or lower, still more preferably 90°C or lower. The polymerization temperature is preferably 10°C or higher, more preferably 20°C or higher, still more preferably 30°C or higher.

To easily achieve various properties described above, preferred examples of the polymerization initiator include a water-soluble radical polymerization initiator and a redox initiator.

The aqueous medium is a reaction medium in which polymerization is allowed to occur, and means a liquid that contains water. The aqueous medium may be any medium that contains water, and may be one containing water and, for example, a fluorine-free organic solvent such as an alcohol, ether, or ketone and/or a fluorine-containing organic solvent having a boiling point of 40°C or lower.

In the emulsion polymerization, additives such as a nucleating agent, a chain transfer agent, a buffer, a pH adjuster, a stabilizing aid, a dispersion stabilizer, a radical scavenger, a decomposer of a polymerization initiator, or a dicarboxylic acid may be used as needed.

To adjust the particle size, a nucleating agent is preferably added in the emulsion polymerization. The nucleating agent is preferably added before starting the polymerization reaction.

The nucleating agent may be a known one. The nucleating agent preferably includes at least one selected from the group consisting of fluoropolyethers, nonionic surfactants, and chain transfer agents, more preferably a nonionic surfactant.

The fluoropolyether may be, for example, perfluoropolyether (PFPE) acid or its salt.

The perfluoropolyether (PFPE) acid or its salt may have any chain structure in which oxygen atoms in the main chain of the molecule are separated by C1-C3 saturated fluorocarbon groups. Also, two or more types of fluorocarbon groups may be present in the molecule. A typical structure has a repeating unit represented by any of the following formulas:

(-CFCF₃-CF₂-O-)ₙ,

(-CF₂-CF₂-CF₂-O-)ₙ,

(-CF₂-CF₂-O-)ₙ-(-CF₂-O-)ₘ,

and

(-CF₂-CFCF₃-O-)ₙ-(-CF₂-O-)ₘ.

These structures are disclosed by Kasai in J. Appl. Polymer Sci. 57, 797 (1995). As disclosed in this literature, the PFPE acid or its salt may have a carboxylic acid group or its salt at one end or each end. The PFPE acid or its salt may also have a sulfonic acid or phosphonic acid group or its salt at one end or each end. Moreover, the PFPE acid or its salt may have a different group at each end. In the case of monofunctional PFPE, the other end of the molecule is usually perfluorinated but may have a hydrogen or chlorine atom. The PFPE acid or its salt contains at least two ether oxygens, preferably at least four ether oxygens, still more preferably at least six ether oxygens. Preferably, at least one of the fluorocarbon groups separating the ether oxygens, more preferably at least two of such fluorocarbon groups contain two or three carbon atoms. Furthermore preferably, at least 50% of the fluorocarbon groups separating the ether oxygens contain two or three carbon atoms. Preferably, the PFPE acid or its salt contains a total of at least 15 carbon atoms, and, for example, a preferred minimum value of n or n + m in the repeating unit structure is at least 5. Two or more PFPE acids or their salts having an acid group at one end or each end may be used in the production method of the disclosure. The PFPE acid or its salt preferably has a number average molecular weight of less than 6000 g/mol.

To further increase the molecular weight of PTFE and improve the strength of the mixture sheet, a radical scavenger or a decomposer of a polymerization initiator is preferably added in the emulsion polymerization. The radical scavenger or the decomposer of a polymerization initiator is added after the start of the polymerization reaction, preferably before 10% by mass, preferably 20% by mass of the total TFE to be consumed in the polymerization reaction is polymerized, while preferably before 50% by mass, preferably 40% by mass of the total TFE to be consumed in the polymerization reaction is polymerized. The radical scavenger or the decomposer of a polymerization initiator is preferably added after later-described depressurization and repressurization, if performed.

The radical scavenger used is a compound that has no reinitiation ability after addition or chain transfer to free radicals in the polymerization system. Specifically, used is a compound having a function of readily causing a chain transfer reaction with a primary radical or propagating radical and then generating a stable radical that does not react with a monomer or a compound having a function of readily causing an addition reaction with a primary radical or propagating radical to generate a stable radical.

In general, those called chain transfer agents are characterized by their activity in terms of chain transfer constant and reinitiation efficiency, and among them, those with almost 0% reinitiation efficiency are called radical scavengers.

The radical scavenger can also be described as, for example, a compound whose chain transfer constant to TFE at the polymerization temperature is greater than the polymerization rate constant and whose reinitiation efficiency is substantially 0%. The phrase "reinitiation efficiency is substantially 0%" means that the generated radicals make the radical scavenger a stable radical.

Preferably, the radical scavenger is a compound having a chain transfer constant (Cs) (= chain transfer rate constant (kc)/polymerization rate constant (kp)) to TFE at the polymerization temperature of greater than 0.1. The compound has a chain transfer constant (Cs) of more preferably 0.5 or greater, still more preferably 1.0 or greater, further preferably 5.0 or greater, particularly preferably 10 or greater.

The radical scavenger preferably includes, for example, at least one selected from the group consisting of aromatic hydroxy compounds, aromatic amines, N,N-diethylhydroxylamine, quinone compounds, terpenes, thiocyanates, and cupric chloride (CuCl₂).

Examples of aromatic hydroxy compounds include unsubstituted phenols, polyhydric phenols, salicylic acid, m- or p-salicylic acid, gallic acid, and naphthol.

Examples of unsubstituted phenols include o-, m-, or p-nitrophenol, o-, m-, or p-aminophenol, and p-nitrosophenol. Examples of polyhydric phenols include catechol, resorcinol, hydroquinone, pyrogallol, phloroglucin, and naphtresorcinol.

Examples of aromatic amines include o-, m-, or p-phenylenediamine, and benzidine.

Examples of quinone compounds include o-, m-, or p-benzoquinone, 1,4-naphthoquinone, and alizarin.

Examples of thiocyanates include ammonium thiocyanate (NH₄SCN), potassium thiocyanate (KSCN), and sodium thiocyanate (NaSCN).

Among these, the radical scavenger is preferably an aromatic hydroxy compound, more preferably an unsubstituted phenol or a polyhydric phenol, still more preferably hydroquinone.

To moderately reduce the standard specific gravity, the amount of the radical scavenger added is preferably an amount equivalent to 3% to 500% (on a molar basis) of the polymerization initiator concentration. The lower limit is more preferably 10% (on a molar basis), still more preferably 15% (on a molar basis). The upper limit is more preferably 400% (on a molar basis), still more preferably 300% (on a molar basis).

The decomposer of a polymerization initiator may be any compound that can decompose the polymerization initiator used, and preferably includes at least one selected from the group consisting of, for example, sulfites, bisulfites, bromates, diimines, diimine salts, oxalic acid, oxalates, copper salts, and iron salts. Examples of sulfites include sodium sulfite and ammonium sulfite. An example of copper salts is copper(II) sulfate and an example of iron salts is iron(II) sulfate.

To moderately reduce the standard specific gravity, the amount of the decomposer added is preferably an amount equivalent to 3% to 500% (on a molar basis) of the initiator concentration. The lower limit is more preferably 10% (on a molar basis), still more preferably 15% (on a molar basis). The upper limit is more preferably 400% (on a molar basis), still more preferably 300% (on a molar basis).

To reduce the amount of coagulum produced during polymerization, the emulsion polymerization may be performed in the presence of a dicarboxylic acid in an amount of 5 to 500 ppm, preferably 10 to 200 ppm in the aqueous medium. If the amount of the dicarboxylic acid is too small relative to the aqueous medium, a sufficient effect may not be achieved. Conversely, if the amount is too large, a chain transfer reaction may occur, and the resulting polymer may have a low molecular weight. The amount of the dicarboxylic acid is more preferably 150 ppm or less. The dicarboxylic acid may be added before the start of the polymerization reaction or may be added during the polymerization.

The dicarboxylic acid is preferably one represented by the formula: HOOCRCOOH (wherein R is a C1-C5 alkylene group), more preferably succinic acid, malonic acid, glutaric acid, adipic acid, or pimelic acid, still more preferably succinic acid.

In the emulsion polymerization, the polymerization temperature and the polymerization pressure are appropriately determined in accordance with the type of the monomer used, the target molecular weight of PTFE, and the reaction rate. The polymerization temperature is typically 5°C to 150°C. The polymerization temperature is preferably 10°C or higher, more preferably 30°C or higher, still more preferably 50°C or higher. The polymerization temperature is more preferably 120°C or lower, still more preferably 100°C or lower.

The polymerization pressure is 0.05 to 10 MPaG. The polymerization pressure is more preferably 0.3 MPaG or higher, still more preferably 0.5 MPaG or higher. The polymerization pressure is more preferably 5.0 MPaG or lower, still more preferably 3.0 MPaG or lower.

When VDF is used as a modifying monomer in the emulsion polymerization, in order to easily achieve the above-mentioned physical properties, the VDF concentration in the gas in the reactor at the time of starting polymerization (when adding an initiator) is preferably set to 0.001 mol% or higher, more preferably 0.01 mol% or higher. The VDF concentration may be 15 mol% or lower, preferably 6.0 mol% or lower, still more preferably 5.0 mol% or lower, further preferably 3.0 mol% or lower, particularly preferably 1.0 mol% or lower. The VDF concentration may be maintained thereafter until the end of the polymerization reaction, or depressurization may be performed during the process. VDF is preferably fed all at once before the start of polymerization. Still, a portion thereof may be added continuously or intermittently after the start of polymerization.

When VDF is used as a modifying monomer in the emulsion polymerization, depressurization is preferably not performed until the polymerization is completed after VDF is introduced into the polymerization container. This allows VDF to remain in the system until the end of polymerization, leading to still higher strength of the mixture sheet containing PTFE to be obtained.

When HFP is used as a modifying monomer in the emulsion polymerization, in order to easily achieve the above-mentioned physical properties, the HFP concentration in the gas in the reactor at the time of starting polymerization (when adding an initiator) is preferably set to 0.01 to 3.0 mol%. Further, the HFP concentration in the gas in the reactor at the time when 40% by mass of the total TFE to be consumed in the polymerization reaction is polymerized is preferably higher than 0 mol% and 0.2 mol% or lower. The HFP concentration is preferably maintained thereafter until the end of the polymerization reaction. HFP may be fed all at once before the start of polymerization, or a portion thereof may be fed before the start of polymerization and the rest may be added continuously or intermittently after the start of polymerization. By allowing HFP to remain until the end of the polymerization reaction, the extrusion pressure is reduced even though the mixture sheet containing PTFE to be obtained has high strength.

When HFP is used as a modifying monomer in the emulsion polymerization, in order to achieve further improved strength of the mixture sheet containing PTFE to be obtained, preferably, depressurization is performed before 5% to 40% by mass of the total TFE to be consumed in the polymerization reaction is polymerized, followed by repressurization with TFE alone.

The depressurization is preferably performed such that the pressure inside the reactor is 0.2 MPaG or lower, more preferably 0.1 MPaG or lower, still more preferably 0.05 MPaG or lower. The depressurization is preferably performed such that the pressure inside the reactor is 0.0 MPaG or higher.

The depressurization and the repressurization may be performed multiple times. The depressurization may be performed to a reduced pressure using a vacuum pump.

When CTFE is used as a modifying monomer in the emulsion polymerization, in order to easily achieve the above-mentioned physical properties, the CTFE concentration in the gas in the reactor at the time of starting polymerization (when adding the initiator) is preferably set to 0.001 mol% or higher, more preferably 0.01 mol% or higher. The CTFE concentration is also preferably 3.0 mol% or lower, more preferably 1.0 mol% or lower. The CTFE concentration may be maintained thereafter until the end of the polymerization reaction, or depressurization may be performed during the polymerization reaction. CTFE is preferably fed all at once before the start of polymerization. Still, a portion thereof may be added continuously or intermittently after the start of polymerization.

When CTFE is used as a modifying monomer in the emulsion polymerization, depressurization is preferably not performed until the polymerization is completed after the CTFE is introduced into the polymerization container. This allows CTFE to remain in the system until the end of polymerization, leading to still higher strength of the mixture sheet containing PTFE to be obtained.

The powder in the step (A) can be produced by suspension polymerization.

The suspension polymerization can be performed by charging a reactor with a monomer such as TFE, an aqueous medium, and optionally a different additive, stirring the contents in the reactor, maintaining the reactor at a predetermined polymerization temperature, and then adding a predetermined amount of a polymerization initiator to start the polymerization reaction. After the polymerization reaction starts, the monomer such as TFE, the polymerization initiator, a chain transfer agent, and the like may be added in accordance with the purposes.

The suspension polymerization can be performed in the presence of a polymerization initiator. The polymerization initiator may be any initiator capable of generating radicals within the polymerization temperature range, and any known oil-soluble and/or water-soluble polymerization initiator may be used. The polymerization initiator may be combined with a reducing agent, for example, into the form of a redox agent, which initiates the polymerization. The concentration of the polymerization initiator is appropriately determined in accordance with the type of the monomer, the target molecular weight of the polytetrafluoroethylene, and the reaction rate.

The polymerization initiator used may be a water-soluble radical polymerization initiator.

Examples of the water-soluble radical polymerization initiator include ionic radical initiators such as persulfates (e.g., ammonium persulfate, potassium persulfate, and alkali metal persulfates) and permanganates. Any of these radical polymerization initiators may be used as an oxidizing component in combination with, for example, any of components such as hydrazine, diimine, iron(II) sulfate, copper(II) sulfate, oxalates, and sulfites as a reducing component to form a redox initiator. Compounds capable of forming hydrates, such as iron(II) sulfate and copper(II) sulfate, may be either anhydrous or hydrated.

Examples of the redox initiator include ammonium persulfate/copper(II) sulfate, ammonium persulfate/iron(II) sulfate, ammonium persulfate/sodium sulfite/iron(II) sulfate, ammonium persulfate/azodicarbonamide/copper(II) sulfate, ammonium persulfate/sodium azodicarboxylate/copper(II) sulfate, ammonium carbamate/copper(II) sulfate, ammonium persulfate/ammonium carbamate/copper(II) sulfate, and potassium permanganate/ammonium oxalate.

In the case of such combinations of redox initiators, preferably, one of the initiators is added in advance into a polymerization vessel, and then the other(s) is added intermittently or continuously under polymerization.

The amount of the radical polymerization initiator used is adjusted so as to allow good control of the reaction rate. For example, in the case of ammonium persulfate, the concentration is preferably 1 to 100 ppm, more preferably 1 to 50 ppm, most preferably 1 to 10 ppm in the aqueous medium.

The suspension polymerization is performed by polymerizing TFE in an aqueous medium under stirring. The aqueous medium means a liquid containing water. The aqueous medium may be any medium containing water.

The suspension polymerization can be performed in the presence or absence of a surfactant. The amount of the surfactant is preferably 2000 ppm by mass or less, more preferably 1000 ppm by mass or less, still more preferably 500 ppm by mass or less, further preferably 200 ppm by mass or less, furthermore preferably 100 ppm by mass or less, furthermore preferably 50 ppm by mass or less relative to the aqueous medium. The amount of the surfactant may be 0 ppm by mass, 0.5 ppm by mass or more, 1 ppm by mass or more, 5 ppm by mass or more, or 10 ppm by mass or more.

The surfactant used in the suspension polymerization is preferably a fluorine-containing surfactant. Examples of the fluorine-containing surfactant include fluorine-containing anionic surfactants. For example, the fluorine-containing anionic surfactant may be a surfactant which contains a fluorine atom and in which the portions excluding the anionic group have a total carbon number of 20 or less.

The fluorine-containing surfactant may also be a fluorine-containing surfactant in which the anionic portion has a molecular weight of 1000 or less, preferably 800 or less. The "anionic portion" means a portion excluding the cation in the fluorine-containing surfactant. For example, in the case of F(CF₂)ₙ₁COOM represented by the formula (I) to be described later, the portion "F(CF₂)ₙ₁COO" corresponds to the anionic portion.

Examples of the fluorine-containing surfactant also include fluorine-containing surfactants having a Log POW of 3.5 or less. The Log POW of the fluorine-containing surfactant is preferably 3.4 or less. The Log POW is a partition coefficient of 1-octanol and water, and is represented by Log P wherein P is the ratio (concentration of fluorine-containing surfactant in octanol)/(concentration of fluorine-containing surfactant in water) after phase separation of an octanol/water (1:1) liquid mixture containing the fluorine-containing surfactant.

The Log POW is calculated as follows. Specifically, HPLC is performed on standard substances (heptanoic acid, octanoic acid, nonanoic acid, and decanoic acid) having known octanol/water partition coefficients under the following conditions, i.e., column: TOSOH ODS-120T column (φ4.6 mm × 250 mm, available from Tosoh corp.); eluent: acetonitrile/0.6% by mass HClO₄ in water = 1/1 (vol/vol%); flow rate: 1.0 mL/min; amount of sample: 300 µL, column temperature: 40°C, and detection light: UV 210 nm. A calibration curve is then drawn using the respective elution times and known octanol/water partition coefficients. Based on this calibration curve, the Log POW is calculated from the elution time of a sample liquid in HPLC.

Specific examples of the fluorine-containing surfactant include those disclosed in US 2007/0015864 A1, US 2007/0015865 A1, US 2007/0015866 A1, US 2007/0276103 A1, US 2007/0117914 A1, US 2007/142541 A1, US 2008/0015319 A1, US 3250808 A, US 3271341 A, JP 2003-119204 A, WO 2005/042593 A1, WO 2008/060461 A1, WO 2007/046377 A1, JP 2007-119526 A, WO 2007/046482 A1, WO 2007/046345 A1, US 2014/0228531 A1, WO 2013/189824 A1, and WO 2013/189826 A1.

Examples of the fluorine-containing anionic surfactant include a compound represented by the following formula (N⁰):

Xⁿ⁰-Rfⁿ⁰-Y⁰ (N⁰)

wherein Xⁿ⁰ is H, Cl, or F; Rfⁿ⁰ is a C3-C20 linear, branched, or cyclic alkylene group in which any or all of Hs are replaced by F, where the alkylene group optionally contains one or more ether bonds with any of Hs are optionally replaced by Cl; and Y⁰ is an anionic group.

The anionic group for Y⁰ may be -COOM, -SO₂M, or - SO₃M, and may be -COOM or -SO₃M.

M is H, a metal atom, NR⁷₄, imidazolium optionally having a substituent, pyridinium optionally having a substituent, or phosphonium optionally having a substituent, where R⁷ is H or an organic group.

Examples of the metal atom include an alkali metal (Group 1) and an alkaline earth metal (Group 2), such as Na, K, and Li.

R⁷ may be H or a C₁₋₁₀ organic group, may be H or a C₁₋₄ organic group, and may be H or a C₁₋₄ alkyl group.

M may be H, a metal atom, or NR⁷₄, may be H, an alkali metal (Group 1), an alkaline earth metal (Group 2), or NR⁷₄, and may be H, Na, K, Li, or NH₄.

In Rfⁿ⁰, 50% or more of H atoms may be replaced by fluorine.

Examples of the compound represented by the formula (N⁰) include: a compound represented by the following formula (N¹):

Xⁿ⁰-(CF₂)ₘ₁-Y⁰ (N¹)

(wherein Xⁿ⁰ is H, Cl, or F; m1 is an integer of 3 to 15;
and Y⁰ is as defined above); a compound represented by the following formula (N²):

   Rfⁿ¹-O-(CF(CF₃)CF₂₀)ₘ₂CFXⁿ⁻¹-Y⁰ (N²)
(wherein Rfⁿ¹ is a C1-C5 perfluoroalkyl group; m2 is an integer of 0 to 3; Xⁿ¹ is F or CF₃; and Y⁰ is as defined above); a compound represented by the following formula (N³):

   Rfⁿ²(CH₂)ₘ₃-(Rfⁿ³)_{q}-Y⁰ (N³)

   (wherein Rfⁿ² is a C1-C13 partially or fully fluorinated alkyl group optionally containing an ether bond and/or a chlorine atom; m3 is an integer of 1 to 3; Rfⁿ³ is a C1-C3 linear or branched perfluoroalkylene group; q is 0 or 1;
   and Y⁰ is as defined above); a compound represented by the following formula (N⁴):

      Rfⁿ⁴-O-(CYⁿ¹Yⁿ²)ₚCF₂-Y⁰ (N⁴)
   (wherein Rfⁿ⁴ is a C1-C12 linear or branched, partially or fully fluorinated alkyl group optionally containing an ether bond; and Yⁿ¹ and Yⁿ² are the same as or different from each other and are each H or F; p is 0 or 1; and Y⁰ is as defined above); and a compound represented by the following formula (N⁵): 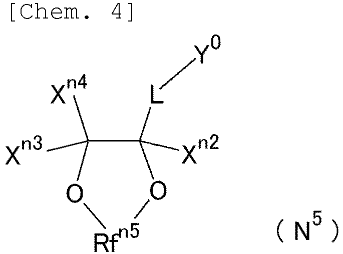
   (wherein Xⁿ², Xⁿ³, and Xⁿ⁴ may be the same as or different from each other and are each H, F, or a C1-C6 linear or branched, partially or fully fluorinated alkyl group optionally containing an ether bond, Rfⁿ⁵ is a C1-C3 linear or branched, partially or fully fluorinated alkylene group optionally containing an ether bond; L is a linking group; and Y⁰ is as defined above, with the proviso that the total carbon number of Xⁿ², Xⁿ³, Xⁿ⁴, and Rfⁿ⁵ is 18 or less).

Specific examples of the compound represented by the formula (N⁰) include a perfluorocarboxylic acid (I) represented by the following formula (I), an ω-H perfluorocarboxylic acid (II) represented by the following formula (II), a perfluoroether carboxylic acid (III) represented by the following formula (III), a perfluoroalkyl alkylene carboxylic acid (IV) represented by the following formula (IV), a perfluoroalkoxyfluorocarboxylic acid (V) represented by the following formula (V), a perfluoroalkyl sulfonic acid (VI) represented by the following formula (VI), an ω-H perfluorosulfonic acid (VII) represented by the following formula (VII), a perfluoroalkyl alkylene sulfonic acid (VIII) represented by the following formula (VIII), an alkyl alkylene carboxylic acid (IX) represented by the following formula (IX), a fluorocarboxylic acid (X) represented by the following formula (X), an alkoxyfluorosulfonic acid (XI) represented by the following formula (XI), a compound (XII) represented by the following formula (XII), and a compound (XIII) represented by the following formula (XIII).

The perfluorocarboxylic acid (I) is represented by the following formula (I):

F(CF₂)ₙ₁COOM (I)

wherein n1 is an integer of 3 to 14; M is H, a metal atom, NR⁷₄, imidazolium optionally containing a substituent, pyridinium optionally containing a substituent, or phosphonium optionally containing a substituent; and R⁷ is H or an organic group.

The ω-H perfluorocarboxylic acid (II) is represented by the following formula (II):

H(CF₂)ₙ₂COOM (II)

wherein n2 is an integer of 4 to 15; and M is defined as described above.

The perfluoroether carboxylic acid (III) is represented by the following formula (III):

Rf¹-O-(CF(CF₃)CF₂O)ₙ₃CF(CF₃)COOM (III)

wherein Rf¹ is a C1-C5 perfluoroalkyl group; n3 is an integer of 0 to 3; and M is defined as described above.

The perfluoroalkylalkylenecarboxylic acid (IV) is represented by the following formula (IV):

Rf²(CH₂)ₙ₄Rf³COOM (IV)

wherein Rf² is a C1-C5 perfluoroalkyl group; Rf³ is a C1-C3 linear or branched perfluoroalkylene group; n4 is an integer of 1 to 3; and M is defined as described above.

The alkoxyfluorocarboxylic acid (V) is represented by the following formula (V):

Rf⁴-O-CY¹Y²CF₂-COOM (V)

wherein Rf⁴ is a C1-C12 linear or branched, partially or fully fluorinated alkyl group optionally containing an ether bond and/or a chlorine atom; Y¹ and Y² are the same as or different from each other, and are each H or F; and M is defined as described above.

The perfluoroalkylsulfonic acid (VI) is represented by the following formula (VI):

F(CF₂)ₙ₅SO₃M (VI)

wherein n5 is an integer of 3 to 14; and M is defined as described above.

The ω-H perfluorosulfonic acid (VII) is represented by the following formula (VII):

H (CF₂)ₙ₆SO₃M (VII)

wherein n6 is an integer of 4 to 14; and M is as defined above.

The perfluoroalkylalkylenesulfonic acid (VIII) is represented by the following formula (VIII):

Rf⁵(CH₂)ₙ₇SO₃M (VIII)

wherein Rf⁵ is a C1-C13 perfluoroalkyl group; n7 is an integer of 1 to 3; and M is defined as described above.

The alkylalkylenecarboxylic acid (IX) is represented by the following formula (IX):

Rf⁶ (CH₂)ₙ₈COOM (IX)

wherein Rf⁶ is a C1-C13 linear or branched, partially or fully fluorinated alkyl group optionally containing an ether bond; n8 is an integer of 1 to 3; and M is defined as described above.

The fluorocarboxylic acid (X) is represented by the following formula (X):

Rf⁷-O-Rf⁸-O-CF₂-COOM (X)

wherein Rf⁷ is a C1-C6 linear or branched, partially or fully fluorinated alkyl group optionally containing an ether bond and/or a chlorine atom; Rf⁸ is a C1-C6 linear or branched, partially or fully fluorinated alkyl group; and M is defined as described above.

The alkoxyfluorosulfonic acid (XI) is represented by the following formula (XI):

Rf⁹-O-CY¹Y²CF₂-SO₃M (XI)

wherein Rf⁹ is a C1-C12 linear or branched, partially or fully fluorinated alkyl group optionally containing an ether bond and optionally containing chlorine; Y¹ and Y² are the same as or different from each other, and are each H or F; and M is defined as described above.

The compound (XII) is represented by the following formula (XII): 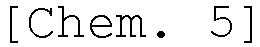 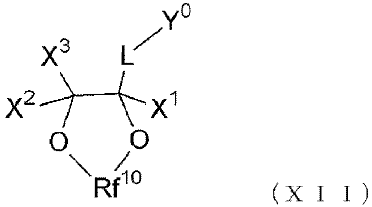 wherein X¹, X², and X³ may be the same as or different from each other and are each H, F, or a C1-C6 linear or branched, partially or fully fluorinated alkyl group optionally containing an ether bond; Rf¹⁰ is a C1-C3 perfluoroalkylene group; L is a linking group; and Y⁰ is an anionic group.

Y⁰ may be -COOM, -SO₂M, or -SO₃M, and may be -SO₃M or COOM, where M is as defined above.

L may be a single bond or a C1-C10 partially or fully fluorinated alkylene group optionally containing an ether bond, for example.

The compound (XIII) is represented by the following formula (XIII):

Rf¹¹-O-(CF₂CF(CF₃)O)ₙ₉(CF₂O)ₙ₁₀CF₂COOM (XIII)

wherein Rf¹¹ is a C1-C5 fluoroalkyl group containing chlorine; n9 is an integer of 0 to 3; n10 is an integer of 0 to 3; and M is defined as described above. The compound (XIII) may be CF₂ClO(CF₂CF(CF₃)O)ₙ₉(CF₂O)ₙ₁₀CF₂COONH₄, which is a mixture having an average molecular weight of 750,
wherein n9 and n10 are defined as described above.

As described above, examples of the fluorine-containing anionic surfactant include carboxylic acid surfactants and sulfonic acid surfactants.

The fluorine-containing surfactant may be a single fluorine-containing surfactant or may be a mixture containing two or more fluorine-containing surfactants.

Examples of the fluorine-containing surfactant include compounds represented by any of the following formulas. The fluorine-containing surfactant may be a mixture of any of these compounds:

F(CF₂)₇COOM,

F(CF₂)₅COOM,

H(CF₂)₆COOM,

H(CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF(CF₃)CF₂OCF₂COOM,

CF₂ClCF(CF₃)OCF₂CF(CF₃)OCF₂COOM,

and 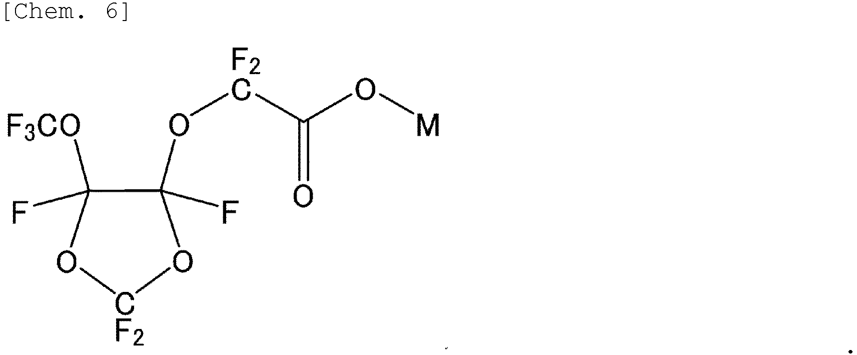 In each formula, M is H, a metal atom, NR⁷₄, imidazolium optionally containing a substituent, pyridinium optionally containing a substituent, or phosphonium optionally containing a substituent, where R⁷ is H or an organic group.

Suspension polymerized particles obtained by suspension polymerization performed in the presence of a fluorine-containing surfactant commonly contain the fluorine-containing surfactant in addition to polytetrafluoroethylene. Suspension polymerized particles obtained by polymerization of monomers such as TFE and a modifying monomer possibly contain a fluorine-containing compound produced by the polymerization of monomers in addition to polytetrafluoroethylene. In the disclosure, the fluorine-containing compound is a compound that is not added during suspension polymerization, and includes, for example, a compound that has a structure similar to that of a fluorine-containing surfactant but has a different number of carbon atoms.

The above-mentioned production method can produce polytetrafluoroethylene particles containing a reduced amount of fluorine-containing compound formed during polymerization of monomers. Furthermore, the production method in the disclosure can produce polytetrafluoroethylene particles containing a reduced amount of fluorine-containing surfactant even when the suspension polymerization is performed in the presence of a fluorine-containing surfactant.

A typical fluorine-containing compound in the suspension polymerized particles is a fluorine-containing compound containing a hydrophilic group and having a molecular weight of 1000 or less, preferably 800 g/mol or less. The above-mentioned production method can produce polytetrafluoroethylene particles in which suspension polymerized particles obtained by polymerization of monomers such as TFE contain a reduced amount of fluorine-containing compound containing a hydrophilic group and having a molecular weight of 1000 or less, preferably 800 g/mol or less.

The hydrophilic group in the fluorine-containing compound is preferably an anionic group such as an acid group, and examples thereof include -NH₂, -PO₃M, -OPO₃M, - SO₃M, -OSO₃M, and -COOM (in each formula, M represents a cation). Preferred among these hydrophilic groups is -SO₃M or -COOM, with -COOM being more preferred.

In one embodiment, the suspension polymerized particles contain, as a fluorine-containing compound containing a hydrophilic group, a compound represented by the following formula (1):

Formula (1): [X-Rf-A⁻]ᵢMⁱ⁺

wherein X is H, Cl, Br, F, or I; Rf is a linear or branched, partially fluorinated or perfluorinated aliphatic group or a linear or branched, partially fluorinated or perfluorinated aliphatic group interrupted by at least one oxygen atom; A⁻ is an acid group; Mⁱ⁺ is a cation with a valence of i; and i is an integer of 1 to 3.

In one embodiment, the suspension polymerized particles contain, as a fluorine-containing compound containing a hydrophilic group, a compound represented by the following formula (2):

Formula (2): [Cₙ₋₁F₂ₙ₋₁COO⁻]M⁺

wherein n is an integer of 9 to 14 and M⁺ is a cation.

The compound represented by the formula (2) (perfluoroalkanoic acid) is known to be formed in the polymerization in which the modifying monomer used is, for example, perfluoroalkyl vinyl ether (see WO 2019/161153 A).

In one embodiment, the suspension polymerized particles contain, as a fluorine-containing compound containing a hydrophilic group, a compound represented by the following formula (3):

Formula (3): [R¹-O-L-CO₂⁻]M⁺

wherein R¹ is a linear or branched, partially fluorinated or perfluorinated aliphatic group or a linear or branched, partially fluorinated or perfluorinated aliphatic group interrupted by at least one oxygen atom; L is a linear or branched non-fluorinated, partially fluorinated, or perfluorinated alkylene group; and M⁺ is a cation.

In one embodiment, the suspension polymerized particles contain, as a fluorine-containing compound containing a hydrophilic group, a compound represented by the formula (4):

Formula (4): [H-(CF₂)ₘCO₂⁻]M⁺

wherein m is an integer of 3 to 19 and M⁺ is a cation.

The suspension polymerized particles obtained may be rinsed and then pulverized, or the suspension polymerized particles obtained may be pulverized while being rinsed, to prepare pulverized particles.

The suspension polymerized particles obtained by suspension polymerization are usually in a wet state. In the production method of the disclosure, the suspension polymerized particles in a wet state may be pulverized, or the suspension polymerized particles in a wet state may be dried and then pulverized. The pulverization may be wet pulverization or dry pulverization.

The suspension polymerized particles may be pulverized using a pulverizer, for example. Examples of the pulverizer include impact pulverizers such as a hammer mill, a pin mill, a high-speed rotary mill, and a jet mill, and attrition pulverizers such as a cutter mill, a feather mill, and a colloid mill, which pulverize materials by shear force generated by a rotary blade and an outer stator (fixed blade). In the pulverization, two or more of pulverizers may be used in combination.

The pulverization is preferably performed at a temperature of -200°C to 50°C, more preferably 1°C or higher and more preferably 40°C or lower, still more preferably 30°C or lower.

When the suspension polymerized particles are pulverized while being rinsed, the suspension polymerized particles may be pulverized in water or an organic solvent. For example, water or an organic solvent and the suspension polymerized particles may be simultaneously fed to an attrition pulverizer such as a cutter mill, and the suspension polymerized particles may be pulverized. Alternatively, water or an organic solvent and the suspension polymerized particles may be mixed in advance, the mixture may be fed to a pulverizer, and the suspension polymerized particles may be pulverized.

Before the suspension polymerized particles are pulverized, the suspension polymerized particles may be rinsed. The suspension polymerized particles can be rinsed with water or an organic solvent. The rinsing may be performed once or multiple times.

Examples of the organic solvent used for rinsing include ethers, halogenated hydrocarbons, aromatic hydrocarbons, pyridine, nitriles, nitrogen-containing polar organic compounds, dimethyl sulfoxide, and alcohols.

The pulverization may be performed once, or may be performed repeatedly until pulverized particles having a desired average particle size or a desired particle size distribution are prepared.

The pulverized particles obtained by pulverization are usually in a wet state. After pulverization and before dehydration, the water content of the pulverized particles is, for example, higher than 40% by mass. In the above-described production method, the wet pulverized particles may be dehydrated. The wet pulverized particles may be dehydrated using a dehydrator, for example. Examples of the dehydrator include a vibration dehydrator, a filtration dehydrator, and a centrifugal dehydrator. The dehydration is preferably performed at lower than 50°C. The dehydration temperature is the temperature of the atmosphere surrounding the pulverized particles.

The wet pulverized particles may be dehydrated and further dried. The drying is performed for the purpose of removing water from the pulverized particles obtained by pulverization. The wet pulverized particles may be dried using a dryer, for example.

Examples of the dryer include a hot air dryer, a conductive dryer, a radiant heat transfer dryer, and a high frequency heat transfer dryer. Examples of the dryer also include a static material dryer, a material transfer dryer, a material agitated dryer, and a material conveyor dryer.

Examples of a hot air, static material dryer and a hot air, material transfer dryer include a box dryer, a tunnel dryer, a band dryer, a vertical turbo dryer, a vertical dryer, and a belt dryer.

Examples of a hot air, material agitated dryer include a fluidized bed dryer, a through flow rotary dryer, an agitated trough dryer, and a multi-stage dryer.

Examples of a hot air, material conveyor dryer include a pneumatic conveying dryer and an atomization dryer (a jet stream dryer, a spray dryer).

Examples of a conductive, static material dryer and a conductive, material transfer dryer include a vacuum box dryer, a cylindrical dryer, a vibration dryer, a vacuum heat dryer, a freeze dryer, and a drum dryer.

Examples of a conductive, material agitated dryer include a cylindrical dryer, a trough dryer, an inverted conical dryer, an extrusion dryer, and a steam heated tube bundle rotary dryer.

Examples of a radiant heat transfer, static material dryer and a radiant heat transfer, material transfer dryer include an infrared dryer and a superheated steam dryer.

Examples of a high frequency heat transfer, static material dryer and a high frequency heat transfer, material transfer dryer include a high-frequency dryer and a microwave dryer.

In one embodiment, the pulverized particles are dried by pneumatic conveying drying. The pneumatic conveying drying can be performed using a pneumatic conveying dryer.

After drying the pulverized particles by pneumatic conveying drying, the solid-gas mixture containing the dried pulverized particles and air may be separated into the pulverized particles and the air using a cyclone or the like, and the pulverized particles may be collected.

The pulverized particles are dried at a temperature of preferably lower than 300°C, more preferably 280°C or lower, still more preferably 250°C or lower, further preferably lower than 200°C, particularly preferably lower than 180°C, most preferably lower than 160°C, while preferably 50°C or higher, more preferably 100°C or higher. The drying temperature is the temperature of the atmosphere surrounding the pulverized particles. When hot air is used for the drying, the drying temperature can be determined by measuring the temperature of the hot air. The temperature of the hot air can be measured at a supply port through which hot air is supplied to the dryer or at an exhaust port through which hot air is exhausted from the dryer. It is preferably measured at the exhaust port.

The pulverized particles preferably have a water content of 40% by mass or less, more preferably 20% by mass or less, still more preferably 10% by mass or less, further preferably 5% by mass or less, furthermore preferably 1% by mass or less, furthermore preferably 0.1% by mass or less, furthermore preferably 0.010 or less, furthermore preferably 0.005 or less, furthermore preferably 0.003 or less, furthermore preferably 0.002 or less, particularly preferably 0.001 or less. The water content of the pulverized particles can be adjusted, for example, by dehydrating or drying the pulverized particles. The water content of the pulverized particles can be determined, for example, as follows. The pulverized particles are sufficiently dried at 150°C for two hours, the mass of the pulverized particles is measured before and after heating, and calculation is performed using the following equation: water content (% by mass) = [(mass (g) of pulverized particles before heating) - (mass (g) of pulverized particles after heating)]/(mass (g) of pulverized particles after heating) × 100

After the suspension polymerized particles are pulverized, the pulverized particles obtained may be subjected to classification by a known method such as air classification. By the classification, fine particles having a very small particle size and coarse particles having a very large particle size can be removed, thereby obtaining pulverized particles having a desired average particle size or a desired particle size distribution.

The pulverized particles preferably have an average particle size of 800 µm or smaller, more preferably 600 µm or smaller, still more preferably 400 µm or smaller, while preferably 1 µm or greater, more preferably 5 µm or greater, still more preferably 10 µm or greater, still more preferably 100 µm or greater, particularly preferably 150 µm or greater, most preferably greater than 200 µm.

The pulverized particles also often have a torn shape or a large, flattened shape due to the pulverization process as described above. Typically, the pulverized particles have a scaly particle shape. Herein, the "PTFE particles having a particle size of 1 µm or greater" refer to the above-mentioned scaly particles.

The resulting pulverized particles may be granulated by a known granulation method.

The mixing in the step (A) can be performed by a known method.

The coagulation in the step (B) can be performed by a known method.

In the step (C), the drying is commonly performed by means such as vacuum, high frequency, or hot air, while the wet powder is kept in a less flowing state, preferably in a stationary state. Friction between powders, especially at high temperatures generally has an unfavorable effect on fine powder PTFE. This is because particles made of PTFE of this type are easily fibrillated even by a small shearing force to lose their original stable particle structure.

The step (C) preferably includes placing the wet powder obtained in the step (B) in a container with air permeability on the bottom and/or sides and heating the powder at a temperature of 130°C to 300°C for two hours or longer. Heat treatment under such extremely limited conditions can efficiently remove the fluorine-containing compound having a molecular weight of 1000 or less together with water, which enables the amounts of the fluorine-containing compound and water to fall within the above respective ranges.

To more efficiently remove water and the fluorine-containing compound, the temperature of the heat treatment in the step (C) is preferably 140°C or higher, more preferably 150°C or higher, still more preferably 160°C or higher, further preferably 180°C or higher, still more preferably 200°C or higher, particularly preferably 220°C or higher, while preferably 280°C or lower, more preferably 250°C or lower.

To more efficiently remove water and the fluorine-containing compound, the duration of the heat treatment in the step (C) is preferably 5 hours or longer, more preferably 10 hours or longer, still more preferably 15 hours or longer. The upper limit is not limited. Still, it is preferably 100 hours, more preferably 50 hours, still more preferably 30 hours, for example.

To more efficiently remove water and the fluorine-containing compound, the wind speed in the step (C) is preferably 0.01 m/s or higher, more preferably 0.03 m/s or higher, still more preferably 0.05 m/s or higher, further preferably 0.1 m/s or higher. To reduce or prevent powder scattering, the wind speed is preferably 50 m/s or lower, more preferably 30 m/s or lower, still more preferably 10 m/s or lower.

The heat treatment in the step (C) can be performed using an electric furnace or a steam furnace. For example, the heat treatment may be performed with an electric furnace such as a co-flow box electric furnace, a ventilated box electric furnace, a ventilated conveyor electric furnace, a band electric furnace, a radiant conveyor electric furnace, a fluidized bed electric furnace, a vacuum electric furnace, a stirring electric furnace, an convection electric furnace, or a hot air circulating electric furnace, or a steam furnace corresponding to any of the foregoing electric furnaces (a device of the type defined by replacing the "electric furnace" in the device name of the foregoing electric furnace with "steam furnace"). To more efficiently remove water and the fluorine-containing compound, preferred are a co-flow box electric furnace, a ventilated box electric furnace, a ventilated conveyor electric furnace, a band electric furnace, a fluidized bed electric furnace, a hot air circulating electric furnace, and steam furnaces corresponding to the forgoing furnaces (devices of the types determined by replacing the "electric furnace" in the device names of the foregoing electric furnaces with "steam furnace").

To more efficiently remove water and the fluorine-containing compound, the heat treatment in the step (C) is preferably such that the wet powder is placed in a container with air permeability on the bottom and/or sides. The container with air permeability on the bottom and/or sides may be any container capable of withstanding the heat treatment temperature, and is preferably made of metal such as stainless steel.

The container with air permeability on the bottom and/or sides is preferably a tray (vat) having air permeability on the bottom and/or sides, more preferably a tray (mesh tray) having the bottom and/or sides made of mesh.

The mesh is preferably either a woven net or perforated metal.

The opening of the mesh is preferably 2000 µm or smaller (ASTM standard mesh No. 10 or higher), more preferably 595 µm or smaller (mesh No. 30 or higher), still more preferably 297 µm or smaller (mesh No. 50 or higher), further preferably 177 µm or smaller (mesh No. 80 or higher), further preferably 149 µm or smaller (mesh No. 100 or higher), particularly preferably 74 µm or smaller (mesh No. 200 or higher). The opening is also preferably 25 µm or greater (mesh No. 500 or lower).

In the case where the mesh is a woven net, the woven net may be, for example, a plain-woven mesh, a twilled-woven mesh, a plain dutch-woven mesh, or a twilled dutch-woven mesh.

When the mesh is a punched metal, the porosity is preferably 10% or higher, more preferably 20% or higher, still more preferably 30% or higher. The porosity is also preferably 95% or lower.

To more efficiently remove water and the fluorine-containing compound, the amount of the wet powder placed in the step (C) is preferably 10 g/cm² or less, more preferably 8 g/cm² or less, still more preferably 5 g/cm² or less, particularly preferably 3 g/cm² or less, while preferably 0.01 g/cm² or more, more preferably 0.05 g/cm² or more, still more preferably 0.1 g/cm² or more.

To more efficiently remove water and the fluorine-containing compound, the water content of the wet powder to be heated in the step (C) is preferably 10% by mass or higher, more preferably 20% by mass or higher, still more preferably 30% by mass or higher, while preferably 150% by mass or lower, more preferably 100% by mass or lower of the wet powder.

The PTFE composition of the disclosure can also be suitably produced by a production method including a step (D) of mixing a PTFE powder obtained by emulsion polymerization with a PTFE powder obtained by suspension polymerization.

The PTFE powder obtained by emulsion polymerization to be used in the step (D) can be produced by coagulating the PTFE aqueous dispersion obtained by emulsion polymerization and drying the coagulate. The aqueous dispersion can be produced by the same method as for the PTFE aqueous dispersion obtained by emulsion polymerization to be used in the step (A). The coagulation and drying can be performed as in the steps (B) and (C).

The PTFE powder obtained by suspension polymerization to be used in the step (D) can be produced by the same method as for the PTFE powder obtained by suspension polymerization to be used in the step (A).

The mixing in the step (D) can be performed by a known dry mixing method.

The PTFE composition of the disclosure is used for an electrochemical device binder. In the electrochemical device binder, the PTFE composition of the disclosure may be used alone or may be used in the form of mixture with a different material (e.g., a polymer different from the PTFE). Still, the PTFE composition of the disclosure is preferably used substantially alone, more preferably used alone. The phrase "the PTFE composition of the disclosure is used substantially alone" means that the PTFE composition is used such that the amount thereof in the electrochemical device binder falls within the range to be described below.

The disclosure also provides an electrochemical device binder consisting essentially of a PTFE composition (hereinafter also referred to as binder (1) of the disclosure), the PTFE composition including PTFE having a particle size of 1 µm or greater.

The disclosure also provides an electrochemical device binder consisting essentially of a PTFE composition (hereinafter also referred to as binder (2) of the disclosure), the PTFE composition including PTFE having a specific surface area of 0.5 m²/g or more and less than 7.0 m²/g.

The disclosure also provides an electrochemical device binder consisting essentially of a PTFE composition (hereinafter also referred to as binder (3) of the disclosure), the PTFE composition including PTFE produced by suspension polymerization.

The binders (1) to (3) of the disclosure are herein collectively referred to as "binder of the disclosure", unless otherwise stated.

The binder of the disclosure containing a specific PTFE composition is less likely to form aggregates with powder components in electrochemical devices, such as electrode active materials and solid electrolytes, even if they are kneaded for a long time. It is homogenously mixable with the powder components. The binder can provide a mixture sheet having high strength and high flexibility.

The binder of the disclosure does not require a large amount of a dispersion medium such as water or an organic solvent and can be combined with a wide range of electrode active materials and solid electrolytes, which is advantageous in terms of the production process. The process and cost derived from use of a dispersion medium can be reduced.

Moreover, the binder of the disclosure has excellent binding force to an active material and an electrolyte, which can reduce the amount of the binder used.

The PTFE composition in the binder of the disclosure may be the same as the PTFE composition of the disclosure described above, and preferred embodiments are also the same.

The binder of the disclosure consists essentially of the PTFE composition. This allows remarkable exertion of the effect attributable to the PTFE composition. The phrase "consists essentially of the PTFE composition" means that the amount of the PTFE composition is 95.0% by mass or more of the binder.

The amount of the PTFE composition is preferably 98.0% by mass or more, more preferably 99.0% by mass or more, still more preferably 99.5% by mass or more, particularly preferably 99.9% by mass or more, most preferably 99.95% by mass or more in the binder.

The binder of the disclosure also preferably consists of the PTFE composition.

The binder of the disclosure is preferably substantially free from an organic solvent. This can reduce the process and cost derived from the use of an organic solvent. The phrase "substantially free from an organic solvent" means that the amount of an organic solvent is 5% by mass or less of the binder.

The amount of the organic solvent is preferably 3% by mass or less, more preferably 1% by mass or less, still more preferably 0.1% by mass or less, further preferably 0.01% by mass or less, particularly preferably 0.001% by mass or less.

The binder of the disclosure is preferably in a powdery form.

The binder of the disclosure is used in an electrochemical device such as a battery or a capacitor.

Examples of the battery include secondary batteries such as a lithium-ion battery.

The capacitor is preferably, but not limited to, an electrochemical capacitor. Examples of the electrochemical capacitor include an electric double layer capacitor, a hybrid capacitor, and a redox capacitor. Examples of the hybrid capacitor include a sodium ion capacitor, a lithium ion capacitor, and a magnesium ion capacitor. Particularly preferred among these is an electric double layer capacitor.

The binder of the disclosure can be suitably used as a binder for a battery, and can be particularly suitably used as a binder for a secondary battery such as a lithium-ion battery.

The binder of the disclosure may be used for producing a part of an electrochemical device, preferably a part of a battery.

The binder of the disclosure can be particularly suitably used as a binder for an electrode.

The binder of the disclosure can also be suitably used as a binder in a solid electrolyte of a solid-state secondary battery.

The disclosure also provides an electrode mixture containing the PTFE composition of the disclosure or the electrode binder of the disclosure described above, and an electrode active material. Use of the electrode mixture of the disclosure can provide mixture sheets in which powder components in electrochemical devices are uniformly dispersed and which have high strength and high flexibility. Even a small amount of the binder can maintain the electrode active material, so that materials for improving the characteristics of an electrochemical device, such as an active material and a conductive aid, can be used in larger amounts.

Examples of the electrode active material include a positive electrode active material and a negative electrode active material.

The positive electrode active material may be any material that can electrochemically occlude and release alkali metal ions, and is preferably, for example, a material containing an alkali metal and at least one transition metal. Specific examples thereof include an alkali metal-containing transition metal complex oxide and an alkali metal-containing transition metal phosphate compound. Particularly preferred among these positive electrode active materials is an alkali metal-containing transition metal complex oxide which produces high voltage. Examples of the alkali metal ions include lithium ions, sodium ions, and potassium ions. In a preferred embodiment, the alkali metal ions may be lithium ions. In other words, in this embodiment, the alkali metal ion secondary battery is a lithium-ion secondary battery.

Examples of the alkali metal-containing transition metal composite oxides include alkali metal-manganese spinel composite oxides (e.g., lithium-manganese spinel composite oxides) represented by the formula:

MₐMn_{2-b}M¹_{b}O₄

wherein M includes at least one metal selected from the group consisting of Li, Na, and K; 0.9 ≤ a; 0 ≤ b ≤ 1.5;
and M¹ includes at least one metal selected from the group consisting of Fe, Co, Ni, Cu, Zn, Al, Sn, Cr, V, Ti, Mg, Ca, Sr, B, Ga, In, Si, and Ge;
alkali metal-nickel composite oxides (e.g., lithium-nickel composite oxides) represented by the formula:

   MNi_{1-c}M²_{c}O₂

   wherein M includes at least one metal selected from the group consisting of Li, Na, and K; 0 ≤ c ≤ 0.5; and M² includes at least one metal selected from the group consisting of Fe, Co, Mn, Cu, Zn, Al, Sn, Cr, V, Ti, Mg, Ca, Sr, B, Ga, In, Si, and Ge; and
   alkali metal-cobalt composite oxides (e.g., lithium-cobalt composite oxides) represented by the formula:

      MCo_{1-d}M³_{d}O₂
   wherein M includes at least one metal selected from the group consisting of Li, Na, and K; 0 ≤ d ≤ 0.5; and M³ includes at least one metal selected from the group consisting of Fe, Ni, Mn, Cu, Zn, Al, Sn, Cr, V, Ti, Mg, Ca, Sr, B, Ga, In, Si, and Ge.

In the above formula, M is preferably a metal selected from the group consisting of Li, Na, and K, more preferably Li or Na, still more preferably Li.

To provide a high-energy-density, high-output secondary battery, preferred among these are MCoO₂, MMnO₂, MNiO₂, MMn₂O₄, MNi_{0.8}Co_{0.15}Al_{0.05}O₂, and MNi_{1/3}CO_{1/3}Mn_{1/3}O₂, for example, and preferred is a compound represented by the following formula (3):

MNiₕCoᵢMnⱼM⁵ₖO₂ (3)

wherein M includes at least one metal selected from the group consisting of Li, Na, and K; M⁵ includes at least one selected from the group consisting of Fe, Cu, Zn, Al, Sn, Cr, V, Ti, Mg, Ca, Sr, B, Ga, In, Si, and Ge; and (h + i + j + k) = 1.0, 0 ≤ h ≤ 1.0, 0 ≤ i ≤ 1.0, 0 ≤ j ≤ 1.5, and 0 ≤ k ≤ 0.2.

Examples of the alkali metal-containing transition metal phosphate compound include a compound represented by the following formula (4):

MₑM⁴_{f}(PO₄)_{g} (4)

wherein M includes at least one metal selected from the group consisting of Li, Na, and K; M⁴ includes at least one selected from the group consisting of V, Ti, Cr, Mn, Fe, Co, Ni, and Cu; and 0.5 ≤ e ≤ 3, 1 ≤ f ≤ 2, and 1 ≤ g ≤ 3. In the above formula, M is preferably a metal selected from the group consisting of Li, Na, and K, more preferably Li or Na, still more preferably Li. In other words, the alkali metal-containing transition metal phosphate compound is preferably a lithium-containing transition metal phosphate compound.

The transition metal of the lithium-containing transition metal phosphate compound is preferably V, Ti, Cr, Mn, Fe, Co, Ni, Cu, or the like. Specific examples thereof include iron phosphates such as LiFePO₄, Li₃Fe₂(PO₄)₃, and LiFeP₂O₇, cobalt phosphates such as LiCoPO₄, and those obtained by replacing any of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphate compound preferably has an olivine structure.

An example of a different positive electrode active material is a lithium-nickel complex oxide. The lithium-nickel complex oxide is preferably a positive electrode active material represented by the following formula (5):

Li_{y}Ni₁₋ₓMₓO₂ (5)

wherein x satisfies 0.01 ≤ x ≤ 0.7; y satisfies 0.9 ≤ y ≤ 2.0; and M is a metal atom (other than Li and Ni).

Other examples of the positive electrode active material include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃. In particular, a positive electrode active material such as M₂MnO₃ or MNi_{0.5}Mn_{1.5}O₂ is preferred because the crystal structure thereof does not collapse even when the secondary battery is operated at a voltage exceeding 4.4 V or at a voltage of 4.6 V or higher. An electrochemical device such as a secondary battery containing a positive electrode material including any of the positive electrode active materials mentioned above is preferred because the remaining capacity thereof is less likely to decrease or the resistance increase thereof is less likely to change even after high-temperature storage and the battery performance does not deteriorate even when the device is operated at high voltage.

Another example of the positive electrode active material is a solid solution material of M₂MnO₃ and MM⁶O₂ wherein M includes at least one metal selected from the group consisting of Li, Na, and K; and M⁶ is a transition metal such as Co, Ni, Mn, or Fe.

An example of the solid solution material is an alkali metal manganese oxide represented by the formula Mx[Mn_{(1-y)}M⁷_{y}]O_{z}. In the formula, M includes at least one metal selected from the group consisting of Li, Na, and K; and M⁷ includes at least one metal element other than M and Mn and includes, for example, one or two or more elements selected from the group consisting of Co, Ni, Fe, Ti, Mo, W, Cr, Zr, and Sn. The values of x, y, and z in the formula are within the ranges of 1 < x < 2, 0 ≤ y < 1, and 1.5 < z < 3, respectively. In particular, a manganese-containing solid solution material in which LiNiO₂ or LiCoO₂ is dissolved in a Li₂MnO₃ base such as Li_{1.2}Mn_{0.5}Co_{0.14}Ni_{0.14}O₂ is preferred because it can lead to an alkali metal ion secondary battery having a high energy density.

Mixing lithium phosphate into the positive electrode active material is preferred to improve the continuous charge characteristics. Lithium phosphate may be used in any manner, and is preferably used in admixture with the positive electrode active material. The lower limit of the amount of lithium phosphate used relative to the total amount of the positive electrode active material and lithium phosphate is preferably 0.1% by mass or more, more preferably 0.3% by mass or more, still more preferably 0.5% by mass or more, while the upper limit thereof is preferably 10% by mass or less, more preferably 8% by mass or less, still more preferably 5% by mass or less.

The positive electrode active material used may be one having a surface to which a substance having a composition different from that of the positive electrode active material is attached. Examples of the surface-attached substance include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

These surface-attached substances may be attached to a surface of the positive electrode active material by, for example, a method of dissolving or suspending the substance in a solvent, impregnating the positive electrode active material with the solution or suspension, and drying the impregnated material; a method of dissolving or suspending a precursor of the substance in a solvent, impregnating the positive electrode active material with the solution or suspension, and heating the material and the precursor to cause a reaction therebetween; or a method of adding the substance to a precursor of the positive electrode active material and simultaneously sintering the substance and the precursor. In the case of attaching carbon, for example, a carbonaceous material in the form of activated carbon may be mechanically attached to the surface afterward.

The lower limit of the amount of the surface-attached substance, in terms of the mass relative to the amount of the positive electrode active material, is preferably 0.1 ppm or more, more preferably 1 ppm or more, still more preferably 10 ppm or more, while the upper limit thereof is preferably 20% or less, more preferably 10% or less, still more preferably 5% or less. The surface-attached substance can reduce oxidation of the electrolyte on the surface of the positive electrode active material and can thereby improve the battery life. Too small an amount of the substance may fail to sufficiently provide this effect. Too large an amount thereof may hinder the entrance and exit of lithium ions, increasing the resistance.

Particles of the positive electrode active material may have any shape conventionally used, such as a bulky shape, a polyhedral shape, a spherical shape, an ellipsoidal shape, a plate shape, a needle shape, or a pillar shape. The primary particles may agglomerate to form secondary particles.

The positive electrode active material has a tap density of preferably 0.5 g/cm³ or higher, more preferably 0.8 g/cm³ or higher, still more preferably 1.0 g/cm³ or higher. The positive electrode active material having a tap density below the lower limit may cause an increased amount of a dispersion medium required and increased amounts of a conductive material and a binder required in formation of the positive electrode active material layer, as well as a limited packing fraction of the positive electrode active material in the positive electrode active material layer, resulting in a limited battery capacity. Using a complex oxide powder having a high tap density enables formation of a high-density positive electrode active material layer. The tap density is commonly preferably as high as possible with no upper limit. Still, too high a tap density may be a rate-determining factor of diffusion of lithium ions in the positive electrode active material layer through the medium of the electrolyte, easily impairing the load characteristics. Thus, the upper limit is preferably 4.0 g/cm³ or lower, more preferably 3.7 g/cm³ or lower, still more preferably 3.5 g/cm³ or lower.

The tap density is determined as the powder packing density (tap density) g/cm³ when 5 to 10 g of the positive electrode active material powder is packed into a 10-ml glass graduated cylinder and the cylinder is tapped 200 times with a stroke of about 20 mm.

The particles of the positive electrode active material have a median diameter d50 (or a secondary particle size in the case where the primary particles agglomerate to form secondary particles) of preferably 0.3 µm or greater, more preferably 0.5 µm or greater, still more preferably 0.8 µm or greater, most preferably 1.0 µm or greater, while preferably 30 µm or smaller, more preferably 27 µm or smaller, still more preferably 25 µm or smaller, most preferably 22 µm or smaller. The particles having a median diameter below the lower limit may fail to provide a product with a high tap density. The particles having a median diameter greater than the upper limit may cause prolonged diffusion of lithium in the particles, impairing the battery performance. Mixing two or more positive electrode active materials having different median diameters d50 can further improve the easiness of packing in formation of a positive electrode.

The median diameter d50 is determined using a known laser diffraction/scattering particle size distribution analyzer. In the case of using LA-920 available from Horiba, Ltd. as the particle size distribution analyzer, the dispersion medium used in the measurement is a 0.1% by mass sodium hexametaphosphate aqueous solution and the measurement refractive index is set to 1.24 after 5-minute ultrasonic dispersion.

In the case where the primary particles agglomerate to form secondary particles, the average primary particle size of the positive electrode active material is preferably 0.05 µm or greater, more preferably 0.1 µm or greater, still more preferably 0.2 µm or greater. The upper limit thereof is preferably 5 µm or smaller, more preferably 4 µm or smaller, still more preferably 3 µm or smaller, most preferably 2 µm or smaller. The primary particles having an average primary particle size greater than the upper limit may have difficulty in forming spherical secondary particles, adversely affecting the powder packing, or may have a greatly reduced specific surface area, highly possibly impairing the battery performance such as output characteristics. In contrast, the primary particles having an average primary particle size below the lower limit may commonly be insufficiently grown crystals, causing poor charge and discharge reversibility, for example.

The average primary particle size is measured by scanning electron microscopic (SEM) observation. Specifically, the average primary particle size is determined as follows. A photograph at a magnification of 10000x is first taken. Any 50 primary particles are selected and the maximum length between the left and right boundary lines of each primary particle is measured along the horizontal line. Then, the average value of the maximum lengths is calculated, which is defined as the average primary particle size.

The positive electrode active material has a BET specific surface area of preferably 0.1 m²/g or larger, more preferably 0.2 m²/g or larger, still more preferably 0.3 m²/g or larger. The upper limit thereof is preferably 50 m²/g or smaller, more preferably 40 m²/g or smaller, still more preferably 30 m²/g or smaller. The positive electrode active material having a BET specific surface area smaller than the above range may easily impair the battery performance. The positive electrode active material having a BET specific surface area larger than the above range may less easily have an increased tap density, easily causing a difficulty in processing the material in formation of the positive electrode active material layer.

The BET specific surface area is defined by a value determined by single point BET nitrogen adsorption utilizing a gas flow method using a surface area analyzer (e.g., fully automatic surface area measurement device, available from Ohkura Riken Co., Ltd.), a sample pre-dried in nitrogen stream at 150°C for 30 minutes, and a nitrogen-helium gas mixture with the nitrogen pressure relative to the atmospheric pressure being accurately adjusted to 0.3.

In the case where the secondary battery of the disclosure is used as a large-size lithium-ion secondary battery for hybrid vehicles or distributed generation, it needs to achieve high output. Thus, the particles of the positive electrode active material are preferably mainly composed of secondary particles. The particles of the positive electrode active material preferably include 0.5 to 7.0% by volume of fine particles having an average secondary particle size of 40 µm or smaller and having an average primary particle size of 1 µm or smaller. The presence of fine particles having an average primary particle size of 1 µm or smaller can enlarge the contact area with the electrolyte and enables more rapid diffusion of lithium ions between the electrode mixture and the electrolyte, resulting in improved output performance of a battery.

The positive electrode active material may be produced by any common method of producing an inorganic compound. In particular, a spherical or ellipsoidal active material can be produced by various methods. For example, a material substance of transition metal is dissolved or crushed and dispersed in a solvent such as water, and the pH of the solution or dispersion is adjusted under stirring to form a spherical precursor. The precursor is recovered and, if necessary, dried. Then, a Li source such as LiOH, Li₂CO₃, or LiNO₃ is added thereto and the mixture is sintered at high temperature, thereby providing an active material.

In production of a positive electrode, one of the aforementioned positive electrode active materials may be used alone or two or more thereof having different compositions may be used in any combination at any ratio. Preferred examples of the combination in this case include a combination of LiCoO₂ with a ternary system such as LiNi_{0.33}Co_{0.33}Mn_{0.33}O₂, a combination of LiCoO₂ with either LiMn₂O₄ or LiMn₂O₄ in which one or more Mn atoms are replaced by a different transition metal, and a combination of LiFePO₄ with either LiCoO₂ or LiCoO₂ in which one or more Co atoms are replaced by a different transition metal.

To achieve a high battery capacity, the amount of the positive electrode active material is preferably 50 to 99.5% by mass, more preferably 80 to 99% by mass of the positive electrode mixture. The amount thereof in the positive electrode active material layer is preferably 80% by mass or more, more preferably 82% by mass or more, particularly preferably 84% by mass or more. The upper limit thereof is preferably 99% by mass or less, more preferably 98% by mass or less. Too small an amount of the positive electrode active material in the positive electrode active material layer may cause an insufficient electric capacity. In contrast, too large an amount thereof may cause insufficient strength of the positive electrode.

The negative electrode active material may be, but is not limited to, any one selected from lithium metal; a material containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, and non-graphitizable carbon; a silicon-containing compound such as silicon or a silicon alloy; and Li₄Ti₅O₁₂, or a mixture of two or more of these. Particularly suitably used among these is a material containing a carbonaceous material at least in part or a silicon-containing compound.

The negative electrode active material used in the disclosure preferably contains silicon as a constituent element. The presence of silicon as a constituent element enables production of a high-capacity battery.

Preferred materials containing silicon include silicon particles, particles having a structure in which fine silicon particles are dispersed in a silicon-based compound, silicon oxide particles represented by the formula SiOx (0.5 ≤ x ≤ 1.6), and a mixture of any of these. Use of any of these can lead to a negative electrode mixture for lithium-ion secondary batteries with higher initial charge and discharge efficiency, high capacity, and excellent cycle characteristics.

The term "silicon oxide" herein is a generic term for amorphous silicon oxides. Silicon oxides prior to disproportionation are represented by the formula: SiOx (0.5 ≤ x ≤ 1.6) where x preferably satisfies 0.8 ≤ x < 1.6, more preferably 0.8 ≤ x < 1.3. This silicon oxide can be obtained, for example, by cooling and precipitating silicon monoxide gas produced by heating a mixture of silicon dioxide and metal silicon.

Particles having a structure in which fine silicon particles are dispersed in a silicon-based compound can be obtained by, for example, a method including sintering a mixture of fine silicon particles with a silicon-based compound, or by heating silicon oxide particles before disproportionation represented by the formula SiOx at a temperature of 400°C or higher, suitably at 800°C to 1100°C in an inert, non-oxidizing atmosphere such as an argon atmosphere to perform a disproportionation reaction. A material obtained by the latter method is particularly suitable because silicon microcrystals are uniformly dispersed. The disproportionation reaction as described above can adjust the size of silicon nanoparticles to 1 to 100 nm. The silicon oxide in the particles having a structure in which silicon nanoparticles are dispersed in silicon oxide is preferably silicon dioxide. Dispersion of silicon nanoparticles (crystals) in amorphous silicon oxide can be confirmed using a transmission electron microscope.

The physical properties of the silicon-containing particles can be appropriately determined in accordance with the target composite particles. For example, the average particle size is preferably 0.1 to 50 µm. The lower limit is more preferably 0.2 µm or greater, still more preferably 0.5 µm or greater. The upper limit is more preferably 30 µm or smaller, still more preferably 20 µm or smaller. The average particle size is expressed as a weight average particle size determined by particle size distribution analysis by a laser diffraction method.

The BET specific surface area is preferably 0.5 to 100 m²/g, more preferably 1 to 20 m²/g. A BET specific surface area of 0.5 m²/g or larger may lead to no risk of decreasing the adhesiveness of the negative electrode material when processed into the electrode and of impairing the battery characteristics. The particles having a BET specific surface area of 100 m²/g or smaller can lead to an increased proportion of silicon dioxide on the particle surface, which may eliminate the risk of battery capacity reduction upon use of the particles as a negative electrode material for a lithium-ion secondary battery.

Coating the silicon-containing particles with carbon imparts conductivity, thereby improving the battery characteristics. Examples of methods for imparting conductivity include mixing the silicon-containing particles with conductive particles such as graphite particles, coating the surfaces of the silicon-containing particles with carbon films, and a combination of both. Preferred is a method of coating the silicon-containing particles with carbon films, and more preferred is a method of chemical vapor deposition (CVD).

To increase the capacity of the electrode mixture obtained, the amount of the negative electrode active material in the electrode mixture is preferably 40% by mass or more, more preferably 50% by mass or more, particularly preferably 60% by mass or more. The upper limit thereof is preferably 99% by mass or less, more preferably 98% by mass or less.

The electrode mixture of the disclosure preferably further contains a conductive aid.

The conductive aid used may be any known conductive material. Specific examples thereof include metal materials such as copper and nickel, and carbon materials such as graphite, e.g., natural graphite and artificial graphite, carbon black, e.g., acetylene black, Ketjen black, channel black, furnace black, lamp black, and thermal black, and amorphous carbon, e.g., needle coke, carbon nanotube, fullerene, and VGCF. One of these may be used alone or two or more thereof may be used in any combination at any ratio.

The conductive aid is used in an amount of commonly 0.01% by mass or more, preferably 0.1% by mass or more, more preferably 1% by mass or more, while commonly 50% by mass or less, preferably 30% by mass or less, more preferably 15% by mass or less in the electrode mixture. The conductive aid in an amount less than this range may cause insufficient conductivity. In contrast, the conductive aid in an amount more than this range may cause a low battery capacity.

The electrode mixture of the disclosure may further contain a thermoplastic resin. Examples of the thermoplastic resin include polyvinylidene fluoride, polypropylene, polyethylene, polystyrene, polyethylene terephthalate, and polyethylene oxide. One of these may be used alone, or two or more of these may be used in any combination at any ratio.

The proportion of the thermoplastic resin relative to the electrode active material is commonly 0.01% by mass or more, preferably 0.05% by mass or more, more preferably 0.10% by mass or more, while commonly 3.0% by mass or less, preferably 2.5% by mass or less, more preferably 2.0% by mass or less. Adding a thermoplastic resin can improve the mechanical strength of the electrode. The thermoplastic resin in a proportion higher than the above range may lower the proportion of the electrode active material in the electrode mixture, resulting in issues such as a low capacity of the battery and a high resistance between the active materials.

The electrode mixture of the disclosure may contain a binder in an amount of 0.1% by mass or more, preferably 0.2% by mass or more, more preferably 0.5% by mass or more, while 50% by mass or less, preferably 40% by mass or less, more preferably 30% by mass or less, still more preferably 10% by mass or less, particularly preferably 5% by mass or less, most preferably 3% by mass or less of the electrode mixture. Too low a proportion of the binder may fail to sufficiently hold the electrode mixture active material and cause insufficient mechanical strength of the electrode mixture sheet, impairing the battery performance such as cycle characteristics. Too high a proportion of the binder may lead to a decrease in the battery capacity and the conductivity. Since the binder of the disclosure has excellent binding force, it can sufficiently hold the electrode active material even when contained in a small amount.

In the electrode mixture of the disclosure, the binder component preferably consists essentially of the PTFE composition, more preferably consists of the PTFE composition. The phrase "the binder component consists essentially of the PTFE composition" means that the amount of the PTFE composition in the binder component constituting the electrode mixture is 95.0% by mass or more in the binder component. The amount of the PTFE composition is preferably 98.0% by mass or more, more preferably 99.0% by mass or more, still more preferably 99.5% by mass or more, particularly preferably 99.9% by mass or more, most preferably 99.95% by mass or more in the binder component.

The electrode mixture of the disclosure is preferably in the form of sheet.

The electrode mixture of the disclosure can suitably be used as an electrode mixture for a secondary battery. In particular, the electrode mixture of the disclosure is suitable for a lithium-ion secondary battery. The electrode mixture of the disclosure, when used for a secondary battery, is commonly used in the form of sheet.

The electrode mixture sheet preferably has a thickness of 300 µm or smaller, more preferably 250 µm or smaller, still more preferably 200 µm or smaller, further preferably 180 µm or smaller, particularly preferably 150 µm or smaller, while preferably 10 µm or greater, more preferably 15 µm or greater, still more preferably 20 µm or greater.

The following describes an example of a specific method of producing an electrode mixture sheet containing an electrode mixture. The electrode mixture sheet is obtainable by a production method including: (1) mixing an electrode active material, a binder, and optionally a conductive aid to prepare a raw material composition containing these; (2) molding the raw material composition obtained in the step (1) into a bulky shape; and (3) rolling the bulky raw material composition obtained in the step (2) into a sheet.

The raw material composition mixed in the step (1) is in a state where materials such as the electrode active material and the binder are simply mixed and does not have a fixed shape. Specific examples of mixing methods include mixing with the use of a W-shaped mixer, a V-shaped mixer, a drum mixer, a ribbon mixer, a conical screw mixer, a single screw kneader, a twin-screw kneader, a mix muller, a stirring mixer, or a planetary mixer.

For the binder mixing conditions in the step (1), the rotational speed is preferably 3000 rpm or less. The rotational speed is preferably 10 rpm or more, more preferably 15 rpm or more, still more preferably 20 rpm or more, while preferably 2000 rpm or less, more preferably 1500 rpm or less, still more preferably 1000 rpm or less. Mixing at a rotational speed below this range may take a long time, affecting the productivity. Mixing at a rotational speed above this range may cause excessive fibrillation, resulting in an electrode mixture sheet having poor strength and poor flexibility.

Molding the raw material composition into a bulky shape in the step (2) means forming the raw material composition into a single mass. Specific examples of a method of molding the raw material composition into a bulky shape include extrusion molding and press molding. The term "bulky" does not specify the shape and means any state of single mass, including a rod shape, a sheet shape, a spherical shape, a cubic shape, and the like.

A specific example of a rolling method in the step (3) is a method of rolling the bulky raw material composition using, for example, a roller press, a flat plate press, or a calender roller.

The step (3) is also preferably followed by a step (4) of applying a larger load to the resulting rolled sheet to form a thinner sheet-shaped product. Repeating the step (4) is also preferred. Thinning the rolled sheet not in one time but in steps as described can lead to better flexibility. The number of performing the step (4) is preferably twice or more and 10 times or less, more preferably 3 times or more and 9 times or less. A specific example of a rolling method is a method of rotating two or a plurality of rollers and passing the rolled sheet therebetween to provide a thinner sheet-shaped product.

To control the fibrillation size, the step (3) or the step (4) is also preferably followed by a step (5) of coarsely crushing the rolled sheet, again forming the coarsely crushed product into a bulky product, and then rolling the bulky product into a sheet-shaped product. Repeating the step (5) is also preferred. The number of performing the step (5) is preferably once or more and 12 times or less, more preferably twice or more and 11 times or less.

Specific examples of a method of coarsely crushing the rolled sheet and again forming the coarsely crushed product into a bulky product in the step (5) include a method of folding the sheet, a method of forming the sheet into a rod- or a thin sheet-shaped product, and a method of forming the sheet into chips. The term "coarsely crushing" herein means changing the form of the rolled sheet obtained in the step (3) or step (4) into a different form so as to roll the product into a sheet-shaped product in the subsequent step, and encompasses simply folding the rolled sheet.

The step (5) may be followed by the step (4), and may be repeated. In any of the steps (2), (3), (4), and (5), uniaxial stretching or biaxial stretching may be performed. The fibrillation size can also be controlled in accordance with the degree of coarse crushing in the step (5).

In the step (3), (4), or (5), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility. The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

The electrode mixture sheet can also suitably be produced by a production method including:
a step (a) of mixing a powdery component and a binder to prepare an electrode mixture; and
a step (b) of calendering or extrusion-molding the electrode mixture to form a sheet,
the mixing in the step (a) including:
(a1) homogenizing the powdery component and the binder into powder; and
(a2) mixing the powdery raw material mixture obtained in the step (a1) to prepare the electrode mixture.

For example, PTFE has two transition temperatures at about 19°C and about 30°C. At lower than 19°C, PTFE can be easily mixed while maintaining its shape. In contrast, at higher than 19°C, the PTFE particulate structure loosens and becomes more sensitive to mechanical shearing. At temperatures higher than 30°C, more significant fibrillation occurs.

Accordingly, the homogenizing in the step (a1) is preferably performed at 19°C or lower, preferably at a temperature of 0°C to 19°C.

In other words, such a step (a1) is preferably performed such that the materials are mixed and thereby homogenized while fibrillation is reduced.

The mixing in the subsequent step (a2) is preferably performed at a temperature of 30°C or higher to promote fibrillation.

The step (a2) is preferably performed at 30°C to 150°C, more preferably 35°C to 120°C, still more preferably 40°C to 100°C.

In an embodiment, the calendering or extrusion in the step (b) is performed at a temperature from 30°C to 150°C, preferably from 35°C to 120°C, more preferably from 40°C to 100°C.

The mixing in the step (a) is preferably performed with shearing force applied.

Specific examples of a mixing method include mixing with the use of a W-shaped mixer, a V-shaped mixer, a drum mixer, a ribbon mixer, a conical screw mixer, a single screw kneader, a twin-screw kneader, a mix muller, a stirring mixer, a planetary mixer, a Henschel mixer, or a rapid mixer.

For the mixing conditions, the rotational speed and the mixing duration are set as appropriate. For example, the rotational speed is preferably 15000 rpm or less. The rotational speed is preferably 10 rpm or more, more preferably 50 rpm or more, still more preferably 100 rpm or more, while preferably 12000 rpm or less, more preferably 10000 rpm or less, still more preferably 8000 rpm or less. Mixing at a rotational speed below this range may take a long time, affecting the productivity. Mixing at a rotational speed above this range may cause excessive fibrillation, resulting in an electrode mixture sheet having poor strength.

The step (a1) is preferably performed at a weaker shearing force than that in the step (a2).

The step (a1) is preferably performed for a shorter duration than that in the step (a2).

In the step (a2), the raw material composition preferably contains no liquid solvent, but a small amount of lubricant may be used. In other words, the powdery raw material mixture obtained in the step (a1) may be combined with a lubricant, whereby paste may be prepared.

Examples of the lubricant include, but are not limited to, water, ether compounds, alcohols, ionic liquids, carbonates, aliphatic hydrocarbons (e.g., low polar solvents such as heptane and xylene), isoparaffinic hydrocarbon compounds, and petroleum distillates (e.g., gasoline (C4-C10), naphtha (C4-C11), kerosene/paraffin (C10-C16), and mixtures of any of these).

The lubricant has a water content of preferably 1000 ppm or less.

The lubricant having a water content of 1000 ppm or less is preferred to reduce deterioration of an electrochemical device. The water content is more preferably 500 ppm or less.

The lubricant, when used, is particularly preferably a low polar solvent such as butyl butyrate or an ether compound.

The amount of the lubricant, when used, is 5.0 to 35.0 parts by weight, preferably 10.0 to 30.0 parts by weight, more preferably 15.0 to 25.0 parts by weight relative to the total weight of the composition fed to the step (a1).

The raw material composition preferably contains substantially no liquid medium. In a conventional method for producing an electrode mixture, typically, a solvent containing a binder dissolved therein is used to prepare slurry containing an electrode mixture component in the form of powder dispersed therein, and the slurry is applied and dried to produce an electrode mixture sheet. In this case, a solvent to disperse or dissolve a binder is used. Still, solvents that can dissolve a binder resin commonly used in conventional cases are limited to specific solvents such as N-methyl pyrrolidone. These solvents are highly polar and requires a drying step, so that the use of these solvents leads to additional steps and cost. These solvents react with an electrolyte such as an electrolyte solution and a solid electrolyte to deteriorate the electrolyte and thus may cause poor battery performance due to residual components in preparation of slurry or after drying. In addition, low polar solvents such as heptane can dissolve very limited types of binder resin and have a low flash point, which may cause a difficulty in handling.

Not using a solvent but using a powdery binder containing less water in forming an electrode mixture sheet can lead to a battery with less deterioration of an electrolyte. The above production method can provide an electrode mixture sheet containing a binder having a fine fibrous structure and can reduce a burden on the production process owing to elimination of slurry preparation.

The step (b) includes calendering or extrusion. The calendering and extrusion can be performed by well-known methods. Thereby, the electrode mixture can be formed into the shape of an electrode mixture sheet.

The step (b) preferably includes (b1) forming the electrode mixture obtained in the step (a) into a bulky electrode mixture and (b2) calendering or extrusion-molding the bulky electrode mixture.

Molding the electrode mixture into a bulky shape means forming the electrode mixture into a single mass.

Specific examples of a method of molding the electrode mixture into a bulky shape include extrusion molding and press molding.

The term "bulky" does not specify the shape and means any state of single mass, including a rod shape, a sheet shape, a spherical shape, a cubic shape, and the like. The size of the mass is preferably such that the diameter or minimum side of the cross section is 10000 µm or greater. The size is more preferably 20000 µm or greater.

A specific example of a method of calendering or extrusion molding in the step (b2) is a method of rolling the electrode mixture using, for example, a roller press or a calender roller.

The step (b) is preferably performed at 30°C to 150°C. As described above, PTFE has a glass transition temperature around 30°C and is thus easily fibrillated at 30°C or higher. Accordingly, the step (b) is preferably performed at such temperatures.

The calendering or extrusion molding applies a shearing force, which fibrillates the PTFE and gives the shape.

The step (b) is also preferably followed by a step (c) of applying a larger load to the resulting rolled sheet to form a thinner sheet-shaped product. Repeating the step (c) is also preferred. Thinning the rolled sheet not in one time but in steps as described can lead to better flexibility.

The number of performing the step (c) is preferably twice or more and 10 times or less, more preferably 3 times or more and 9 times or less.

A specific example of a rolling method is a method of rotating two or a plurality of rollers and passing the rolled sheet therebetween to provide a thinner sheet-shaped product.

To control the sheet strength, the step (b) or the step (c) is also preferably followed by a step (d) of coarsely crushing the rolled sheet, again forming the coarsely crushed product into a bulky product, and then rolling the bulky product into a sheet-shaped product. Repeating the step (d) is also preferred. The number of performing the step (d) is preferably once or more and 12 times or less, more preferably twice or more and 11 times or less.

Specific examples of a method of coarsely crushing the rolled sheet and again forming the coarsely crushed product into a bulky product in the step (d) include a method of folding the rolled sheet, a method of forming the rolled sheet into a rod- or a thin sheet-shaped product, and a method of forming the rolled sheet into chips. The term "coarsely crushing" herein means changing the form of the rolled sheet obtained in the step (b) or step (c) into a different form so as to roll the product into a sheet-shaped product in the subsequent step, and encompasses simply folding the rolled sheet.

The step (d) may be followed by the step (c), and may be repeated.

In any of the steps (a), (b), (c), and (d), uniaxial stretching or biaxial stretching may be performed.

The sheet strength can also be controlled in accordance with the degree of coarse crushing in the step (d).

In the step (b), (c), or (d), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility.

The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

The steps (c) and (d) are preferably performed at 30°C or higher, more preferably 60°C or higher. The steps (c) and (d) are preferably performed at 150°C or lower.

The electrode mixture sheet may be used as an electrode mixture sheet for a secondary battery. The electrode mixture sheet may be for either a negative electrode or a positive electrode. In particular, the electrode mixture sheet is suitable for a lithium-ion secondary battery.

The disclosure also provides an electrode including the aforementioned PTFE composition of the disclosure or the binder of the disclosure, an electrode active material, and a current collector. In the electrode of the disclosure, powder components in electrochemical devices are uniformly dispersed. Thus, the electrode has high strength and high flexibility. Even a small amount of the binder can maintain the electrode active material, so that materials for improving the characteristics of an electrochemical device, such as an active material and a conductive aid, can be used in larger amounts.

The electrode of the disclosure may include the aforementioned electrode mixture of the disclosure (preferably the electrode mixture sheet) and a current collector.

The electrode of the disclosure may be a positive electrode or may be a negative electrode.

The positive electrode is preferably composed of a current collector and an electrode mixture sheet containing the positive electrode active material. Examples of the material of the current collector for a positive electrode include metal materials such as aluminum, titanium, tantalum, stainless steel, and nickel, and alloys of any of these; and carbon materials such as carbon cloth and carbon paper. Preferred is any metal material, especially aluminum or an alloy thereof.

In the case of a metal material, the current collector may be in the form of metal foil, metal cylinder, metal coil, metal plate, expanded metal, perforated metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is commonly 1 µm or greater, preferably 3 µm or greater, more preferably 5 µm or greater, while commonly 1 mm or smaller, preferably 100 um or smaller, more preferably 50 um or smaller. The metal foil having a thickness smaller than this range may have insufficient strength as a current collector. Conversely, the metal foil having a thickness greater than the above range may have poor handleability.

Roughening treatment of the surface of the current collector is also preferred to improve the adhesion between the current collector and the positive electrode active material layer and to reduce the electric contact resistance between the current collector and the positive electrode active material layer.

The current collector preferably has a surface roughness, which is expressed as Sa (arithmetic mean height), of about 260 nm or more, more preferably about 280 nm or more, still more preferably about 300 nm or more.

Covering the surface of the current collector with a conductive aid is also preferred to reduce the electric contact resistance between the current collector and the positive electrode active material layer. Examples of the conductive aid include carbon and noble metals such as gold, platinum, and silver. Carbon is particularly preferred because of its light weight.

The positive electrode may be produced by a common method. In an exemplary method, the electrode mixture sheet and the current collector are laminated via an adhesive, followed by vacuum drying.

The positive electrode mixture sheet has a density of preferably 2.80 g/cm³ or higher, more preferably 3.00 g/cm³ or higher, still more preferably 3.20 g/cm³ or higher, while preferably 3.80 g/cm³ or lower, more preferably 3.75 g/cm³ or lower, still more preferably 3.70 g/cm³ or lower. Cracks may tend to occur in the positive electrode mixture sheet having a density higher than the above range. The positive electrode mixture sheet having a density lower than the above range may cause poor conductivity between the active materials and thus increase the battery resistance, failing to provide high output.

The positive electrode may have any thickness. To achieve a high capacity and high output, the lower limit of the thickness of the mixture layer on one side of the current collector excluding the thickness of the metal foil of the current collector is preferably 10 µm or greater, more preferably 20 µm or greater, while preferably 500 µm or smaller, more preferably 450 µm or smaller.

The negative electrode is preferably composed of a current collector and an electrode mixture sheet containing the negative electrode active material. Examples of the material of the current collector for a negative electrode include metal materials such as copper, nickel, titanium, tantalum, and stainless steel, and alloys of any of these; and carbon materials such as carbon cloth and carbon paper. Preferred is any metal material, especially copper, nickel, or an alloy of any of these.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is commonly 1 µm or greater, preferably 3 µm or greater, more preferably 5 µm or greater, while commonly 1 mm or smaller, preferably 100 µm or smaller, more preferably 50 µm or smaller. The metal foil having a thickness smaller than this range may have insufficient strength as a current collector. Conversely, the metal foil having a thickness greater than the above range may have poor handleability.

Roughening treatment of the surface of the current collector is also preferred to improve the adhesion between the current collector and the positive electrode active material layer and to reduce the electric contact resistance between the current collector and the positive electrode active material layer.

The current collector preferably has a surface roughness, which is expressed as Sa (arithmetic mean height), of about 260 nm or more, more preferably about 280 nm or more, still more preferably about 300 nm or more.

Covering the surface of the current collector with a conductive aid is also preferred to reduce the electric contact resistance between the current collector and the positive electrode active material layer. Examples of the conductive aid include carbon and noble metals such as gold, platinum, and silver. Carbon is particularly preferred because of its light weight.

The negative electrode may be produced by a common method. In an exemplary method, the electrode mixture sheet and the current collector are laminated via an adhesive, followed by vacuum drying.

The negative electrode mixture has a density of preferably 1.3 g/cm³ or higher, more preferably 1.4 g/cm³ or higher, still more preferably 1.5 g/cm³ or higher, while preferably 2.0 g/cm³ or lower, more preferably 1.9 g/cm³ or lower, still more preferably 1.8 g/cm³ or lower. Cracks may tend to occur in the negative electrode mixture sheet having a density higher than the above range. The negative electrode mixture sheet having a density lower than the above range may cause poor conductivity between the active materials and thus increase the battery resistance, failing to provide high output.

The negative electrode may have any thickness. To achieve a high capacity and high output, the lower limit of the thickness of the mixture layer on one side of the current collector excluding the thickness of the metal foil of the current collector is preferably 10 µm or greater, more preferably 20 µm or greater, while preferably 500 µm or smaller, more preferably 450 µm or smaller.

The disclosure also provides a secondary battery including the aforementioned electrode of the disclosure.

The secondary battery of the disclosure may be a secondary battery containing an electrolyte solution or may be a solid-state secondary battery.

The solid-state secondary battery herein is a secondary battery containing a solid electrolyte, and may be a semi-solid-state secondary battery containing, as an electrolyte, a solid electrolyte and a liquid component, or an all-solid-state secondary battery containing a solid electrolyte alone as an electrolyte.

The secondary battery containing an electrolyte solution may be obtained by use of components used for a known secondary battery, such as an electrolyte solution and a separator. These will be described in detail below.

The electrolyte solution preferably used is a non-aqueous electrolyte solution. The non-aqueous electrolyte solution used may be a solution obtained by dissolving a known electrolyte salt in a known organic solvent for dissolving an electrolyte salt.

The organic solvent for dissolving an electrolyte salt used may include, but is not limited to, one or two or more of known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorine solvents such as fluoroethylene carbonate, fluoroether, and fluorinated carbonate.

Examples of the electrolyte salt include LiClO₄ LiAsF₆, LiBF₄, LiPF₆, LiN(SO₂CF₃)₂, and LiN(SO₂C₂F₅)₂. To achieve good cycle characteristics, particularly preferred is LiPF₆, LiBF₄, LiN(SO₂CF₃)₂, LiN(SO₂C₂F₅)₂, or a combination of any of these.

The electrolyte salt is at a concentration of preferably 0.8 mol/L or higher, more preferably 1.0 mol/L or higher. The upper limit is commonly 1.5 mol/L or less, though it depends on the organic solvent for dissolving an electrolyte salt used.

The secondary battery containing an electrolyte solution preferably further includes a separator. The separator may be formed from any known material and may have any known shape as long as the resulting separator is stable to the electrolyte solution and is excellent in a liquid-retaining ability. The separator is preferably in the form of a porous sheet or a nonwoven fabric that is formed from a material stable to the electrolyte solution, such as resin, glass fiber, or inorganic matter, and that has an excellent liquid-retaining ability.

Examples of the material of a resin or glass-fiber separator include polyolefins such as polyethylene and polypropylene, aromatic polyamide, polytetrafluoroethylene, polyether sulfone, and glass filters. One of these materials may be used alone or two or more thereof may be used in any combination at any ratio, for example, in the form of a polypropylene/polyethylene bilayer film or a polypropylene/polyethylene/polypropylene trilayer film. To achieve good permeability of the electrolyte solution and a good shut-down effect, the separator is preferably a porous sheet or a nonwoven fabric formed from a polyolefin such as polyethylene or polypropylene.

The separator may have any thickness, and the thickness is commonly 1 µm or greater, preferably 5 µm or greater, more preferably 8 µm or greater, while commonly 50 µm or smaller, preferably 40 µm or smaller, more preferably 30 µm or smaller. A separator thinner than the above range may have poor insulation and mechanical strength. A separator thicker than the above range may cause not only poor battery performance such as poor rate characteristics but also a low energy density of the whole electrolyte solution battery.

Examples of a material of the inorganic matter include oxides such as alumina and silicon dioxide, nitrides such as aluminum nitride and silicon nitride, and sulfates such as barium sulfate and calcium sulfate, each in the form of particles or fibers.

The separator used may be in the form of a thin film such as a nonwoven fabric, a woven fabric, or a microporous film. The thin film used preferably has a pore size of 0.01 to 1 µm and a thickness of 5 to 50 µm. Instead of the above separate thin film, the separator used may have a structure in which a composite porous layer containing particles of the above inorganic matter is disposed on a surface of one or each of the positive and negative electrodes using a resin binder. For example, alumina particles having a 90% particle size of smaller than 1 µm may be applied to the respective surfaces of the positive electrode with fluororesin used as a binder to form a porous layer.

The external case may be made of any material that is stable to an electrolyte to be used. Specific examples thereof include metals such as nickel-plated steel plates, stainless steel, aluminum and aluminum alloys, and magnesium alloys, and a layered film (laminate film) of resin and aluminum foil. To reduce the weight, preferably used is a metal such as aluminum or an aluminum alloy or a laminate film.

An external case made of metal may have a sealed-up structure formed by welding the metal by laser welding, resistance welding, or ultrasonic welding, or a caulking structure using the metal with a resin gasket in between. An external case made of the laminate film may have a sealed-up structure formed by hot-melting resin layers. To improve the sealability, a resin that is different from the resin of the laminate film may be disposed between the resin layers. In particular, in the case of forming a sealed-up structure by hot-melting the resin layers with current collecting terminals in between, metal and resin are to be bonded. Thus, the resin to be disposed between the resin layers is preferably a resin having a polar group or a modified resin having a polar group introduced therein.

The secondary battery containing an electrolyte solution may have any shape, such as a cylindrical shape, a square shape, a laminate shape, a coin shape, or a large-size shape. The shapes and structures of the positive electrode, the negative electrode, and the separator may be changed in accordance with the shape of the battery.

The solid-state secondary battery is preferably an all-solid-state secondary battery. The solid-state secondary battery is preferably a lithium-ion battery or is preferably a sulfide-based solid-state secondary battery.

The solid-state secondary battery preferably includes a positive electrode, a negative electrode, and a solid electrolyte layer between the positive electrode and the negative electrode.

In the solid-state secondary battery, the binder of the disclosure may be used for an electrode layer or a solid electrolyte layer.

According to a preferred embodiment of the disclosure, the disclosure relates to a solid-state secondary battery mixture (preferably a mixture sheet) containing the binder of the disclosure and a solid electrolyte and a solid electrolyte layer (preferably a solid electrolyte layer sheet) containing the binder of the disclosure and a solid electrolyte.

The solid electrolyte used in a solid-state secondary battery mixture may be a sulfide-based solid electrolyte or an oxide-based solid electrolyte. In particular, using a sulfide-based solid electrolyte can advantageously lead to the mixture sheet to be flexible.

The sulfide-based solid electrolyte is not limited. The sulfide-based solid electrolyte used may be any one selected from Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li₄₋ₓGe₁₋ₓPₓS₄ (x = 0.6 to 0.8), Li_{4+y}Ge_{1-y}Ga_{y}S₄ (y = 0.2 to 0.3), LiPSCl, LiCl, Li_{7-x-2y}PS_{6-x-y}Clₓ (0.8 ≤ x ≤ 1.7, 0 < y ≤ -0.25x + 0.5), and Li₁₀SnP₂S₁₂, or a mixture of two or more thereof.

The sulfide-based solid electrolyte preferably contains lithium. A sulfide-based solid electrolyte containing lithium is used in a solid-state battery in which lithium ions are used as carriers, and is particularly preferred in that it can lead to an electrochemical device having a high energy density.

The oxide-based solid electrolyte is preferably a compound that contains an oxygen atom (O), that has conductivity of metal ions belonging to Group 1 or Group 2 of the Periodic Table, and that has electronically insulating properties.

Specific examples of the compound include LiₓₐLa_{ya}TiO₃ (xa = 0.3 to 0.7, ya = 0.3 to 0.7) (LLT), Li_{xb}La_{yb}Zr_{zb}M^{bb}_{mb}O_{nb} (wherein M^{bb} includes at least one element selected from Al, Mg, Ca, Sr, V, Nb, Ta, Ti, Ge, In, and Sn; xb satisfies 5 ≤ xb ≤ 10; yb satisfies 1 ≤ yb ≤ 4; zb satisfies 1 ≤ zb ≤ 4; mb satisfies 0 ≤ mb ≤ 2; and nb satisfies 5 ≤ nb ≤ 20), Li_{xc}B_{yc}M^{cc}_{zc}O_{nc} (wherein M^{cc} includes at least one element selected from C, S, Al, Si, Ga, Ge, In, and Sn; xc satisfies 0 ≤ xc ≤ 5; yc satisfies 0 ≤ yc ≤ 1; zc satisfies 0 ≤ zc ≤ 1; and nc satisfies 0 ≤ nc ≤ 6), Li_{xd}(Al,Ga)_{yd}(Ti,Ge)_{zd}Si_{ad}P_{md}O_{nd} (1 ≤ xd ≤ 3, 0 ≤ yd ≤ 2, 0 ≤ zd ≤ 2, 0 ≤ ad ≤ 2, 1 ≤ md ≤ 7, and 3 ≤ nd ≤ 15), Li₍₃₋₂ₓₑ)M^{ee}ₓₑD^{ee}O (wherein xe is a number of 0 or greater and 0.1 or smaller, M^{ee} is a divalent metal atom, D^{ee} is a halogen atom or a combination of two or more halogen atoms), Li_{xf}Si_{yf}O_{zf} (1 ≤ xf ≤ 5, 0 < yf ≤ 3, and 1 ≤ zf ≤ 10), Li_{xg}S_{yg}O_{zg} (1 ≤ xg ≤ 3, 0 < yg ≤ 2, and 1 ≤ zg ≤ 10), Li₃BO₃-Li₂SO₄, Li₂O-B₂O₃-P₂O , Li₂O-SiO₂, Li₆BaLa₂Ta₂O₁₂, Li₃PO_{(4-3/2w)}N_{w} (w < 1), Li_{3.5}Zn_{0.25}GeO₄ having a lithium super ionic conductor (LISICON) crystal structure, La_{0.51}Li_{0.34}TiO_{2.94} having a perovskite crystal structure, La_{0.55}Li_{0.35}TiO₃, LiTi₂P₃O₁₂ having a natrium super ionic conductor (NASICON) crystal structure, Li_{1+xh+yh}(Al,Ga)ₓₕ(Ti,Ge)₂₋ₓₕSi_{yh}P_{3-yh}O₁₂ (0 ≤ xh ≤ 1 and 0 ≤ yh ≤ 1), and Li₇La₃Zr₂O₁₂ (LLZ) having a garnet crystal structure. Ceramic materials in which element substitution is performed for LLZ are also known. Examples thereof include Li_{6.24}La₃Zr₂Al_{0.24}O_{11.98} and Li_{6.25}Al_{0.25}La₃Zr₂O₁₂ in which partial element substitution using Al is performed for LLZ, Li_{6.6}La₃Zr_{1.6}Ta_{0.4}O₁₂ in which partial element substitution using Ta is performed for LLZ, and Li_{6.75}La₃Zr_{1.75}Nb_{0.25}O₁₂ in which partial element substitution using Nb is performed for LLZ. Other examples include LLZ-based ceramic materials in which element substitution using at least one of magnesium (Mg) or A (A includes at least one element selected from the group consisting of calcium (Ca), strontium (Sr), and barium (Ba)) is performed for LLZ. Phosphorus compounds containing Li, P, and O are also preferred. Examples thereof include lithium phosphate (Li₃PO₄), LiPON in which one or more oxygen atoms in lithium phosphate are replaced with nitrogen, and LiPOD¹ (wherein D¹ includes at least one selected from Ti, V, Cr, Mn, Fe, Co, Ni, Cu, Zr, Nb, Mo, Ru, Ag, Ta, W, Pt, Au, and the like). LiA¹ON (wherein A¹ includes at least one selected from Si, B, Ge, Al, C, Ga, and the like) can also be preferably used. Specific examples thereof include Li₂O-Al₂O₃-SiO₂-P₂O₅-TiO₂-GeO₂ and Li₂O-Al₂O₃-SiO₂-P₂O₅-TiO₂.

The oxide-based solid electrolyte preferably contains lithium. An oxide-based solid electrolyte containing lithium is used in a solid-state battery in which lithium ions are used as carriers, and is particularly preferred in that it can lead to an electrochemical device having a high energy density.

The oxide-based solid electrolyte is preferably an oxide having a crystal structure. An oxide having a crystal structure is particularly preferred in terms of good Li ion conductivity. The oxide having a crystal structure may be of perovskite type (e.g., La_{0.51}Li_{0.34}TiO_{2.94}), NASICON type (e.g., Li_{1.3}Al_{0.3}Ti_{1.7}(PO₄)₃), or garnet type (e.g., Li₇La₃Zr₂O₁₂ (LLZ)). Preferred among these is the garnet type.

The oxide-based solid electrolyte has a volume average particle size of preferably, but not limited to, 0.01 µm or greater, more preferably 0.03 µm or greater. The upper limit thereof is preferably 100 µm or smaller, more preferably 50 µm or smaller. The average particle size of the oxide-based solid electrolyte particles is measured by the following procedure. A 1% by mass dispersion of the oxide-based solid electrolyte particles is prepared by dilution with water (or heptane in the case of a substance unstable in water) in a 20-mL sample bottle. The diluted dispersion sample is irradiated with 1-kHz ultrasonic waves for 10 minutes, and immediately thereafter used for the test. Data is acquired from this dispersion sample 50 times using a quartz cell for measurement at a temperature of 25°C with a laser diffraction/scattering particle size distribution analyzer LA-920 (available from Horiba, Ltd.), and the volume average particle size is determined. For other detailed conditions, JIS Z8828:2013 "Particle size analysis - Dynamic light scattering" is referred as necessary. Five samples are prepared for each level and the average value is used.

The solid-state secondary battery may include a separator between the positive electrode and the negative electrode. Examples of the separator include porous films such as polyethylene and polypropylene films; nonwoven fabrics made of resin such as polypropylene, and nonwoven fabrics such as glass fiber nonwoven fabrics.

The solid-state secondary battery may further include a battery case. The battery case may have any shape that can accommodate the aforementioned components such as the positive electrode, the negative electrode, and the solid electrolyte layer. Specifically, the battery may be of cylindrical type, square type, coin type, or laminate type.

The solid-state secondary battery can be produced by, for example, stacking a positive electrode, a solid electrolyte layer sheet, and a negative electrode in this order and pressing them.

It should be appreciated that a variety of modifications and changes in the structure and other details may be made to the aforementioned embodiments without departing from the spirit and scope of the claims.

### EXAMPLES

The disclosure is more specifically described hereinbelow with reference to examples, but the disclosure is not limited to these examples.

The physical properties were determined by the following methods.

### <Average primary particle size>

A PTFE aqueous dispersion was diluted with water to a solid content concentration of 0.15% by mass. The transmittance of 550-nm light relative to the unit length of the resulting diluted latex was measured. The Feret diameters in a transmission electron microscopic image were measured and the number-based length average primary particle size was determined therefrom. A calibration curve was obtained from these values. Using this calibration curve, the average primary particle size was determined from the measured transmittance of 550-nm light incident on each sample.

### <Polymer solid concentration>

A PTFE aqueous dispersion in an amount of 1 g was dried in an air dryer at 150°C for 60 minutes, and the ratio of the mass of the heating residue to the mass (1 g) of the aqueous dispersion, expressed as a percentage, was used as the polymer solid concentration.

### <Melt flowability>

The mass (g/10 min) of a polymer flowing out of a nozzle (inner size: 2.095 mm, length: 8 mm) per 10 minutes at a measurement temperature of 372°C and a load of 5 kg was measured in conformity with ASTM D1238 using a melt indexer. Those having an MFR of 0.25 g/10 min or more were considered to be melt-flowable, whereas those having an MFR of less than 0.25 g/10 min were considered to be non-melt-flowable.

### <Standard specific gravity (SSG)>

The SSG was determined by the water displacement method in conformity with ASTM D792 using a sample molded in conformity with ASTM D4895-89.

### <Median diameter (d50)>

The median diameter of the PTFE powder was determined by the following laser diffraction method. This was performed in a dry manner using a HELOS & RODOS system (product name, available from SYMPATEC). The powder to be measured was dispersed by compressed air at a dispersion pressure of 2 bar, and the shadow of the powder to be measured projected by a laser was detected by the measurement sensor unit to calculate the particle size distribution of the powder to be measured and determine the average particle size (particle size at 50% in the cumulative distribution) d50 on a volume basis. The d50 was defined as equivalent to the particle size corresponding to 50% of the cumulative volume in the particle size distribution.

### <Amount of modifying monomer>

PTFE powder or composition was press-molded into a thin-film disc and the thin-film disc was subjected to FT-IR measurement, so that infrared absorbances were obtained. The amount of PPVE was determined by multiplying the ratio (absorbance at 995 cm⁻¹)/(absorbance at 935 cm⁻¹) by 0.14.

### <Specific surface area>

The specific surface area was determined using a gas mixture of 30% nitrogen and 70% helium as a carrier gas and liquid nitrogen for cooling by the BET method (flow method, single-point determination) based on JIS Z 8830. The apparatus used was a Macsorb HM Model-1210.

### <Presence or absence of PTFE particle having particle size of 1 µm or greater>

The presence or absence of PTFE particles having a particle size of 1 µm or greater was determined by measuring the particle sizes of the PTFE particles by scanning electron microscope (SEM) observation. The particle size of a PTFE particle was determined by taking an SEM image of the PTFE powder or composition at a magnification of 2000 times and measuring the distance between two horizontal parallel lines sandwiching the particle.

### <Amount of PTFE containing PTFE particles having particle size of 1 µm or greater>

About 5 g of PTFE powder was fractionated into particles obtained by emulsion polymerization and particles obtained by suspension polymerization. The mass of the particles obtained by emulsion polymerization and the mass of the particles obtained by suspension polymerization were measured, and the amount of PTFE having a particle size of 1 µm or greater was calculated according to the following formula. The sample was taken three times and this calculation was performed for each sample; the values were then averaged and this average was taken as the amount of PTFE having a particle size of 1 µm or greater. Also, that the particles obtained by suspension polymerization did not contain PTFE particles having a particle size of smaller than 1 µm was confirmed by the above-mentioned particle size measurement method. The difference between PTFE powders obtained by suspension polymerization and PTFE powders obtained by emulsion polymerization is apparent to those skilled in the art.

Amount (% by mass) of PTFE containing PTFE particles having particle size of 1 µm or greater = (mass (g) of particles obtained by suspension polymerization)/[(mass (g) of particles obtained by suspension polymerization) + (mass (g) of particles obtained by emulsion polymerization)] × 100

The amount of PTFE containing PTFE particles having a particle size of 1 µm or greater was also measured by SEM observation. In the SEM observation, an SEM image of the PTFE powder was taken at a magnification of 2000 times, and the amount of PTFE containing PTFE particles having a particle size of 1 µm or greater was calculated according to the formula below. SEM images of five different locations were taken, this calculation was performed for each image, the values were then averaged, and this average was taken as the amount of PTFE containing PTFE particles having a particle size of 1 µm or greater. Amount (% by mass) of PTFE containing PTFE particles having particle size of 1 µm or greater = (area (µm2) of PTFE particles having particle size of 1 µm or greater)/[(area (µm2) of PTFE particles having particle size of 1 µm or greater) + (area (µm2) of PTFE particles having particle size of smaller than 1 µm)] × 100

### <Amount of PTFE having specific surface area of 0.5 m²/g or more and less than 7.0 m²/g, and amount of PTFE obtained by suspension polymerization>

These amounts were determined by the same method as for the amount of PTFE containing PTFE particles having a particle size of 1 µm or greater. In other words, in the examples and comparative examples, the amount of PTFE having a specific surface area of 0.5 m²/g or more and less than 7.0 m²/g and the amount of PTFE obtained by suspension polymerization are each equal to the amount of PTFE containing PTFE particles having a particle size of 1 µm or greater.

### <Endothermic peak temperature>

The endothermic peak temperature was defined as the temperature corresponding to the minimum point on a heat-of-fusion curve obtained by performing differential scanning calorimetry (DSC) at a temperature-increasing rate of 10°C/min on a PTFE powder or composition that had never been heated to a temperature of 300°C or higher. When two or more minimum points were present, the temperature corresponding to the smallest value was defined as an endothermic peak temperature.

### <Water content>

The mass of the PTFE powder or composition in an amount of about 20 g was weighed before and after heating at 150°C for two hours, and the water content was calculated by the following formula. The sample was taken three times and the following calculation was performed for each sample; the values were then averaged and this average was taken as the water content. Water content (% by mass) = [(mass (g) of PTFE powder or composition before heating) - (mass (g) of PTFE powder or composition after heating)]/(mass (g) of PTFE powder or composition before heating) × 100

### <Amounts of perfluoroether carboxylic acids A and B>

To 1 g of the PTFE powder or composition weighed was added 10 g (12.6 ml) of methanol, followed by sonication for 60 minutes to obtain an extract. The resulting extract was subjected to a LC/MS/MS assay. The extract was subjected to measurement for fluorine-containing compounds therein using a liquid chromatograph mass spectrometer (Waters, LC-MS ACQUITY UPLC/TQD). The structure of the measurement device and the LC-MS measurement conditions are shown in Table 1. Aqueous solutions having five or more different levels of fluorine-containing compound concentrations were prepared using an aqueous solution of a fluorine-containing compound with a known concentration, and LC/MS analysis was performed on the aqueous solutions containing varied amounts of the fluorine-containing compound. The relation between the amount and the area relative to the amount was plotted, and a calibration curve was drawn. Based on the resulting calibration curve, the area of the fluorine-containing compound in the extract in the LC/MS chromatogram was converted to the amount of the fluorine-containing compound.

The lower detection limit in this measurement method is 10 ppb by mass.

**[Table 1]**

| LC system | | | | |
|---|---|---|---|---|
| | Device | Acquity UPLC from Waters | | |
| | Column | Acquity UPLC BEH C18 1.7 µm (2.1 × 50 mm) from Waters | | |
| | Mobile phase | A CH₃CN | | |
| | | B 20 mM CH₃COONH₄/H₂O | | |
| | | | 0 → 1.5 min | AB = 10:90 |
| | | | 1.5 → 8.5 min | A:B = 10:90 → A:B = 90:10 Linear gradient |
| | | | 8.5 →10 min | A:B = 90:10 |
| | Flow rate | | 0.4 mL/min | |
| | Column temperature | 40°C | | |
| | Sample injection amount | 5 µL | | |

| MS system | | | | |
|---|---|---|---|---|
| | Device | TQ Detecter | | |
| | Measurement mode | MRM (Multiple Reaction Monitoring) | | |
| | Ionization method | Electrospray ionization | | |
| | | Negative mode | | |

A white solid A (perfluoroether carboxylic acid A ammonium salt) was obtained by the method described in Synthetic Example 1 in WO 2021/045228.

The following fluorine-containing surfactant having a molecular weight of 1000 or less was provided.

Perfluoroether carboxylic acid B ammonium salt:
Ammonium perfluoro(2-methyl-3-oxahexanoate) available from Fujifilm Wako Pure Chemical Corporation, structural formula: CF₃CF₂CF₂OCF(CF₃)COONH₄
The following hydrophilic monomer was provided.

Hydrophilic monomer: Ammonium 2,3,3,3-tetrafluoro-2-[(1,1,2-trifluoro-2-propenyl)oxy]-propanoate, structural formula: CH₂=CFCF₂OCF(CF₃)COONH₄

### (F106 low water content)

### Synthesis Example 1

A 6-L stainless-steel autoclave equipped with a stainless-steel stirring blade and a temperature-controlling jacket was charged with 3480 g of deionized water, 100 g of paraffin wax, and 5.3 g of the white solid A. The inside of the autoclave was purged with nitrogen gas with warming to 70°C to remove oxygen. TFE was injected to set the pressure inside the system to 0.78 MPaG and the temperature inside the system was maintained at 70°C under stirring. Next, an aqueous solution prepared by dissolving 15.0 mg of ammonium persulfate in 20 g of water was injected with TFE, whereby a polymerization reaction was started. The pressure inside the system dropped as the polymerization reaction progressed. TFE was thus added so that the temperature inside the system was maintained at 70°C and the pressure inside the system was maintained at 0.78 MPaG.

When 400 g of TFE had been consumed from the start of the polymerization, an aqueous solution prepared by dissolving 18.0 mg of hydroquinone serving as a radical scavenger in 20 g of water was injected with TFE. The polymerization was further continued. When the amount of TFE polymerized reached approximately 1200 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby a PTFE aqueous dispersion was obtained. The average primary particle size of the resulting PTFE aqueous dispersion was 310 nm, and the solid content concentration was 25.3% by mass.

### Production Example 1

The PTFE aqueous dispersion obtained in Synthesis Example 1 was diluted to a solid content concentration of 13% by mass. The PTFE was coagulated with stirring in the container, and water was filtered out, whereby a wet PTFE powder was obtained.

The resulting wet PTFE powder was placed in a stainless-steel mesh tray (amount: 2.0 g/cm²), and the mesh tray was heated in a hot air circulating electric furnace at 180°C. After 20 hours, the mesh tray was taken out and air-cooled, whereby a PTFE powder 1 was obtained.

The PTFE powder 1 was non-melt-flowable. The PTFE powder 1 had a SSG of 2.156 and a specific surface area of 7.5 m²/g, contained no PTFE particles having a particle size of 1 µm or greater, and had an endothermic peak temperature of 345°C, a water content of 0.000% by mass, and a perfluoroether carboxylic acid A content of less than 10 ppb by mass.

### Production Example 2

Polymerization of tetrafluoroethylene was performed by the method disclosed in Production Example 3 of WO 03/035724. In the polymerization, perfluoro(propyl vinyl ether) was not used, and 1.0 g of a fluorine-containing surfactant was charged. The resulting suspension polymerized PTFE particles were taken out, rinsed with pure water, and coarsely pulverized to obtain coarsely pulverized particles. The coarsely pulverized particles were dried by pneumatic conveying drying, and the dried coarsely pulverized particles were pulverized in an air jet mill to obtain a PTFE powder 2.

The PTFE powder 2 was non-melt-flowable. The PTFE powder 2 had a SSG of 2.162, a median diameter of 26 µm, and a specific surface area of 3.2 m²/g.

### Production Example 3

Polymerization of tetrafluoroethylene was performed by the method disclosed in Production Example 4 of WO 03/035724. In the polymerization, no fluorine-containing surfactant was used. The resulting suspension polymerized PTFE particles were taken out, rinsed with pure water, and coarsely pulverized to obtain coarsely pulverized particles. The coarsely pulverized particles were dried by pneumatic conveying drying, and the dried coarsely pulverized particles were pulverized in an air jet mill to obtain a PTFE powder 3.

The PTFE powder 3 was non-melt-flowable. The PTFE powder 3 had a SSG of 2.154, a median diameter of 49 µm, and a specific surface area of 2.3 m²/g.

### Production Example 4

Polymerization of tetrafluoroethylene was performed by the method disclosed in Production Example 2 of WO 03/035724. In the polymerization, 85 g of perfluoro(propyl vinyl ether) was charged, and no fluorine-containing surfactant was used. The resulting suspension polymerized PTFE particles were taken out, rinsed with pure water, and coarsely pulverized to obtain coarsely pulverized particles. The coarsely pulverized particles were dried by pneumatic conveying drying, and the dried coarsely pulverized particles were pulverized in an air jet mill to obtain a PTFE powder 4.

The PTFE powder 4 was non-melt-flowable. The PTFE powder 4 had a SSG of 2.150, a median diameter of 19 µm, a PPVE modification amount of 0.08% by mass, and a specific surface area of 1.9 m²/g.

### Synthesis Example 2

A PTFE aqueous dispersion was obtained as in Synthesis Example 1, except that the 5.3 g of the white solid A was changed to 15.75 g of the perfluoroether carboxylic acid B ammonium salt and 35 mg of the hydrophilic monomer. The average primary particle size of the resulting PTFE aqueous dispersion was 295 nm, and the solid content concentration was 26.5% by mass.

### Production Example 5

The PTFE aqueous dispersion obtained in Synthesis Example 2 was diluted to a solid content concentration of 13% by mass. The PTFE was coagulated with stirring in the container, and water was filtered out, whereby a wet PTFE powder was obtained.

The resulting wet PTFE powder was placed in a flat tray (tray with no air permeability on the bottom and sides), and the flat tray was heated in a hot air circulating electric furnace at 145°C. After 18 hours, the flat tray was taken out and air-cooled, whereby a PTFE powder 5 was obtained.

The PTFE powder 5 was non-melt-flowable. The PTFE powder 5 had a SSG of 2.159 and a specific surface area of 7.5 m²/g and contained no PTFE particles having a particle size of 1 µm or greater.

### Manufacturing Example 1

The PTFE aqueous dispersion obtained in Synthesis Example 1 and the PTFE powder 2 obtained in Production Example 2 were mixed in a mass ratio on a solids basis (PTFE aqueous dispersion:PTFE powder 2) of 90:10 and diluted to a solid content concentration of 13% by mass. The dilution was stirred vigorously in a container equipped with a stirrer for coagulation, and water was filtered out, whereby a wet PTFE powder was obtained. The resulting wet PTFE powder was placed in a stainless-steel mesh tray (amount: 2.0 g/cm²), and the mesh tray was heated in a hot air circulating electric furnace at 180°C. After 18 hours, the mesh tray was taken out and air-cooled, whereby a PTFE composition 1 was obtained.

The PTFE composition 1 contained PTFE particles having a particle size of 1 µm or greater. The PTFE composition 1 contained 9% by mass of PTFE containing PTFE particles having a particle size of 1 µm or greater and had an endothermic peak temperature of 345°C, a water content of 0.000% by mass, and a perfluoroether carboxylic acid A content of less than 10 ppb by mass.

### Manufacturing Example 2

The PTFE powder 1 obtained in Production Example 1 and the PTFE powder 3 obtained in Production Example 3 were mixed in a mass ratio (PTFE powder 1:PTFE powder 3) of 90:10 to obtain a PTFE composition 2.

The PTFE composition 2 contained PTFE particles having a particle size of 1 µm or greater. The PTFE composition 2 contained 10% by mass of PTFE containing PTFE particles having a particle size of 1 µm or greater and had an endothermic peak temperature of 345°C, a water content of 0.001% by mass, and a perfluoroether carboxylic acid A content of less than 10 ppb by mass.

### Manufacturing Example 3

A PTFE composition 3 was obtained as in Manufacturing Example 2, except that the mass ratio of the PTFE powders was changed to 80:20.

The PTFE composition 3 contained PTFE particles having a particle size of 1 µm or greater. The PTFE composition 3 contained 21% by mass of PTFE containing PTFE particles having a particle size of 1 µm or greater and had an endothermic peak temperature of 345°C, a water content of 0.001% by mass, and a perfluoroether carboxylic acid A content of less than 10 ppb by mass.

### Manufacturing Example 4

A PTFE composition 4 was obtained as in Manufacturing Example 2, except that the mass ratio of the PTFE powders was changed to 60:40.

The PTFE composition 4 contained PTFE particles having a particle size of 1 µm or greater. The PTFE composition 4 contained 42% by mass of PTFE containing PTFE particles having a particle size of 1 µm or greater and had an endothermic peak temperature of 345°C, a water content of 0.001% by mass, and a perfluoroether carboxylic acid A content of less than 10 ppb by mass.

### Manufacturing Example 5

A PTFE composition 5 was obtained as in Manufacturing Example 2, except that the mass ratio of the PTFE powders was changed to 30:70.

The PTFE composition 5 contained PTFE particles having a particle size of 1 µm or greater. The PTFE composition 5 contained 69% by mass of PTFE containing PTFE particles having a particle size of 1 µm or greater and had an endothermic peak temperature of 337°C, a water content of 0.000% by mass, and a perfluoroether carboxylic acid A content of less than 10 ppb by mass.

### Manufacturing Example 6

The PTFE powder 1 obtained in Production Example 1 and the PTFE powder 4 obtained in Production Example 4 were mixed in a mass ratio (PTFE powder 1:PTFE powder 4) of 90:10 to obtain a PTFE composition 6.

The PTFE composition 6 contained PTFE particles having a particle size of 1 µm or greater. The PTFE composition 6 contained 10% by mass of PTFE containing PTFE particles having a particle size of 1 µm or greater and had a PPVE modification amount of 0.01% by mass, an endothermic peak temperature of 345°C, and a water content of 0.001% by mass.

### Manufacturing Example 7

The wet powder obtained in Production Example 1 was placed in a flat tray (tray with no air permeability on the bottom and sides), and the flat tray was heated in a hot air circulating electric furnace at 180°C. After five hours, the flat tray was taken out and air-cooled, whereby a PTFE powder 6 was obtained.

The PTFE powder 6 contained no PTFE particles having a particle size of 1 µm or greater. The PTFE powder 6 had an endothermic peak temperature of 345°C and a water content of 0.126% by mass.

### Manufacturing Example 8

The PTFE powder 5 obtained in Production Example 5 and the PTFE powder 3 obtained in Production Example 3 were mixed in a mass ratio (PTFE powder 5:PTFE powder 3) of 90:10 to obtain a PTFE composition 7.

The PTFE composition 7 contained PTFE particles having a particle size of 1 µm or greater. The PTFE composition 7 contained 11% by mass of PTFE containing PTFE particles having a particle size of 1 µm or greater and had an endothermic peak temperature of 345°C, a water content of 0.020% by mass, and a perfluoroether carboxylic acid B content of 144 ppb by mass.

The PTFE compositions obtained as above were evaluated by the following methods.

### Evaluation of electrolyte-containing battery

By the following procedures, mixture sheets of Examples 1 to 7 and Comparative Examples 1 and 2 were produced, and evaluations of the sheets and batteries were performed.

### <Production of positive electrode mixture sheet>

The active material and the conductive aid were weighed, and the materials were fed into a V-type mixer, followed by mixing at 37 rpm for 10 minutes, whereby a mixture containing the active material and the conductive aid was obtained. Then, the weighed binder (PTFE powder or composition) was added to the mixture and the mixture was allowed to cool sufficiently in a thermostatic bath at 5°C. The mixture containing the active material, the conductive aid, and the binder was fed into a Henschel mixer and processed at 1000 rpm for three minutes to homogenize the mixture.

Thereafter, the mixture was sufficiently warmed in a thermostatic bath at 100°C. Then, the mixture was treated in a pressure kneader (D1-5: Nihon Spindle Manufacturing Co., Ltd.) for five minutes (32 rpm, heater 50°C, pressure 5 MPa) to promote fibrillation, thereby obtaining a bulky electrode mixture with aggregating properties. The bulky electrode mixture was fed into a Henschel mixer and processed at 300 rpm for one minute for further pulverization, thereby obtaining an electrode mixture. The electrode mixture was fed to parallel metal rolls (temperature: 80°C, rotational speed: 1 m/min) and rolled, whereby an electrode mixture sheet was obtained. The resulting rolled sheet was folded into two and thereby coarsely crushed, and the electrode mixture was again fed to the metal rolls (temperature: 80°C, rotational speed: 1 m/min) and rolled, whereby an electrode mixture sheet having higher strength was obtained.

The electrode mixture sheet was then fed to a roll press machine and the gap was adjusted. The thickness of the positive electrode mixture layer was finally adjusted to 90 µm.

Table 2 shows the material types and compositions.

**[Table 2]**

| | (A) Active material | (B) Binder | (C) Conductive aid | Composition ratio A:B:C (mass ratio) |
|---|---|---|---|---|
| Comparative Example 1 | Li(Ni_{0.8}Mn_{0.1}Co_{0.1})O₂ | PTFE powder 6 | denka Li-400 | 96:2:2 |
| Comparative Example 2 | Li(Ni_{0.8}Mn_{0.1}Co_{0.1})O₂ | PTFE powder 1 | denka Li-400 | 96:2:2 |
| Example 1 | Li(Ni_{0.8}Mn_{0.1}Co_{0.1})O₂ | PTFE composition 1 | denka Li-400 | 96:2:2 |
| Example 2 | Li(Ni_{0.8}Mn_{0.1}Co_{0.1})O₂ | PTFE composition 2 | denka Li-400 | 96:2:2 |
| Example 3 | Li(Ni_{0.8}Mn_{0.1}Co_{0.1})O₂ | PTFE composition 3 | denka Li-400 | 96:2:2 |
| Example 4 | Li(Ni_{0.8}Mn_{0.1}Co_{0.1})O₂ | PTFE composition 4 | denka Li-400 | 96:2:2 |
| Example 5 | Li(Ni_{0.8}Mn_{0.1}Co_{0.1})O₂ | PTFE composition 5 | denka Li-400 | 96:2:2 |
| Example 6 | Li(Ni_{0.8}Mn_{0.1}Co_{0.1})O₂ | PTFE composition 6 | denka Li-400 | 96:2:2 |
| Example 7 | Li(Ni_{0.8}Mn_{0.1}Co_{0.1})O₂ | PTFE composition 7 | denka Li-400 | 96:2:2 |

| | | | | |
|---|---|---|---|---|
| denka Li-400: carbon black available from Denka Co., Ltd. | | | | |

### <Evaluation of aggregating properties of powder>

The electrode mixture in an amount of 10 g before fed to the parallel metal rolls was sieved using a sieve with 0.18-mm mesh aperture (JIS Z 8801) for 30 seconds. The mass proportion of the aggregates remaining on the mesh was measured (rounded down to the nearest whole number). The results are shown in Table 3. The electrode mixture with few aggregates has good sheet formability and good homogeneity.

### <Measurement of strength of positive electrode mixture sheet>

The positive electrode mixture sheet was cut, whereby a strip-shaped test piece having a width of 4 mm was produced. A tensile tester (AGS-100NX, available from Shimadzu Corp.) was used to determine the strength of the test piece under the condition of 100 mm/min. The chuck-to-chuck distance was set to 30 mm. A displacement was applied to the test piece until breaking, and the maximum stress of the measured results was taken as the strength of each sample. The test was performed with N = 8. The test results were averaged. The results were compared with that of Comparative Example 1 taken as 100. The coefficient of variation was calculated to evaluate the variability. The results are shown in Table 3.

### <Evaluation of flexibility of positive electrode mixture sheet (bending test)>

The obtained electrode mixture sheets were cut,
whereby test pieces with a width of 4 cm and a length of 10 cm were produced. The test pieces were then wrapped around a Φ2-mm rod, and the test pieces were visually checked for damage such as scratches and cracks. The cases with no damage were evaluated as ○ (good), while the cases with damage were evaluated as × (poor). The results are shown in Table 3.

### <Production of positive electrode>

The positive electrode mixture sheet was bonded to 20-µm aluminum foil in the following manner.

The adhesive used was a slurry prepared by dissolving polyvinylidene fluoride (PVDF) in N-methylpyrrolidone (NMP) and dispersing carbon black therein at a ratio of 80:20. This adhesive was applied to aluminum foil and dried on an electric griddle at 120°C for 15 minutes, whereby a current collector with an adhesive layer was formed.

The positive electrode mixture sheet was then placed on the current collector with an adhesive layer, and the positive electrode mixture sheet and the current collector were bonded to each other using a roll press machine heated to 100°C. The workpiece was cut to provide a piece in a desired size, followed by tab attachment, whereby a positive electrode was obtained.

### <Production of negative electrode>

First, 98 parts by mass of a carbonaceous material (graphite) was mixed with 1 part by mass of an aqueous dispersion of sodium carboxymethyl cellulose (concentration of sodium carboxymethyl cellulose: 1% by mass) and 1 part by mass of an aqueous dispersion of styrene-butadiene rubber (concentration of styrene-butadiene rubber: 50% by mass) respectively serving as a thickening agent and a binder. The components were mixed using a disperser to form slurry. The resulting slurry was applied to 10-µm-thick copper foil and dried. The workpiece was rolled using a press and cut to provide a piece in a desired size, followed by tab attachment, whereby a negative electrode was obtained.

### <Preparation of electrolyte solution>

A solvent mixture of ethylene carbonate (EC), ethyl methyl carbonate (EMC), and dimethyl carbonate (DMC) (EC:EMC:DMC = 30:30:40 (volume ratio)) was weighed as an organic solvent into a sample bottle, and fluoroethylene carbonate (FEC) and vinylene carbonate (VC) each in an amount of 1% by mass were dissolved therein, whereby a solution mixture was prepared. A LiPF₆ salt was mixed with this solution mixture at 23°C so that the concentration thereof in the electrolyte solution was 1.1 mol/L, whereby a non-aqueous electrolyte solution was obtained.

### <Production of aluminum laminate cell>

The above positive electrode and negative electrode were placed to face each other with a 20-um-thick microporous polyethylene film (separator) in between. The non-aqueous electrolyte solution prepared above was injected thereinto and the non-aqueous electrolyte solution was made to sufficiently permeate into the components such as the separator. The workpiece was then sealed, precharged, and aged, whereby a lithium-ion secondary battery was produced.

### <Evaluation of storage characteristics (remaining capacity ratio and amount of gas generated)>

The lithium-ion secondary battery produced above was subjected to constant current/constant voltage charge (hereinafter, referred to as CC/CV charge) (1 C cut off) to 4.3 V at a current corresponding to 0.33 C at 25°C, and then discharged to 3 V at a constant current of 0.33 C. This was counted as one cycle, and the discharge capacity at the third cycle was used to determine the initial discharge capacity.

The battery whose initial discharge capacity had been evaluated was again subjected to CC/CV charge (0.1 C cut off) at 25°C to 4.3 V, and the volume of the battery was determined by the Archimedes' method. After the volume of the battery was determined, the battery was stored at a high temperature of 60°C for 30 days. After storage at high temperature, the battery was sufficiently cooled, and the volume thereof was determined at 25°C. Based on the difference in volume of the battery before and after the storage test, the amount of gas generated was determined. The amounts of gas generated were compared with the amount of gas generated in Comparative Example 1 taken as 100.

After the amount of gas generated was determined, the battery was discharged to 3 V at 0.33 C at 25°C and the remaining capacity was determined.

The ratio of the remaining capacity after high-temperature storage to the initial discharge capacity was calculated, which was defined as the remaining capacity ratio (%). The test was performed with N = 5. The test results were averaged. (Remaining capacity)/(Initial discharge capacity) × 100 = Remaining capacity rate (%)

The results are shown in Table 3.

**[Table 3]**

| | Aggregating properties of powder | Strength | Coefficient of variation | Bending test | Remaining capacity | Amount of gas generated |
|---|---|---|---|---|---|---|
| Comparative Example 1 | 21% | 100% | 32% | × | 75% | 100 |
| Comparative Example 2 | 18% | 105% | 25% | × | 76% | 92 |
| Example 1 | 2% | 132% | 9% | ○ | 81% | 87 |
| Example 2 | 5% | 130% | 14% | ○ | 81% | 87 |
| Example 3 | 4% | 124% | 10% | ○ | 80% | 87 |
| Example 4 | 0% | 123% | 8% | ○ | 80% | 87 |
| Example 5 | 0% | 115% | 7% | ○ | 78% | 88 |
| Example 6 | 8% | 121% | 15% | ○ | 79% | 88 |
| Example 7 | 5% | 126% | 15% | ○ | 82% | 89 |

### Evaluation of solid electrolyte mixture sheet

By the following procedures, mixture sheets of Examples 8 to 14 and Comparative Examples 3 and 4 were produced and evaluated. The production and evaluation were performed in an argon atmosphere.

### <Production of solid electrolyte mixture sheet>

The weighed binder (PTFE powder or composition) was cooled sufficiently in a thermostatic bath at 5°C, fed into a Henschel mixer, and processed at 800 rpm for 10 minutes, whereby pulverization was performed.

The pulverized binder and the solid electrolyte were each weighed and cooled sufficiently in a thermostatic bath at 5°C. They were fed into a Henschel mixer and processed at 300 rpm for one minute to homogenize the mixture.

Then, the mixture was thoroughly heated in a thermostatic bath at 40°C and processed in a Henschel mixer at 1000 rpm for one minute so that fibrillation was promoted, whereby an electrolyte mixture was obtained.

The electrode mixture was fed to parallel metal rolls (temperature: 80°C, rotational speed: 1 m/min) and rolled, whereby an electrolyte mixture sheet was obtained. The resulting rolled sheet was folded into two and thereby coarsely crushed, and the electrolyte mixture was again fed to the metal rolls (temperature: 80°C, rotational speed: 1 m/min) and rolled, whereby an electrolyte mixture sheet having higher strength was obtained.

The electrolyte mixture sheet was then fed to a roll press machine and the gap was adjusted. The thickness of the electrolyte mixture sheet was finally adjusted to 120 µm.

Table 4 shows the material types and compositions.

**[Table 4]**

| | (A) Active material | (B) Binder | (C) Conductive aid | (D) Solid electrolyte | Composition ratio A:B:C:D (mass ratio) |
|---|---|---|---|---|---|
| Comparative Example 3 | Not used | PTFE powder 6 | Not used | Li₆PS₅Cl | 0:1.6:0:98.4 |
| Comparative Example 4 | Not used | PTFE powder 1 | Not used | Li₆PS₅Cl | 0:1.6:0:98.4 |
| Example 8 | Not used | PTFE composition 1 | Not used | Li₆PS₅Cl | 0:1.6:0:98.4 |
| Example 9 | Not used | PTFE composition 2 | Not used | Li₆PS₅Cl | 0:1.6:0:98.4 |
| Example 10 | Not used | PTFE composition 3 | Not used | Li₆PS₅Cl | 0:1.6:0:98.4 |
| Example 11 | Not used | PTFE composition 4 | Not used | Li₆PS₅Cl | 0:1.6:0:98.4 |
| Example 12 | Not used | PTFE composition 5 | Not used | Li₆PS₅Cl | 0:1.6:0:98.4 |
| Example 13 | Not used | PTFE composition 6 | Not used | Li₆PS₅Cl | 0:1.6:0:98.4 |
| Example 14 | Not used | PTFE composition 7 | Not used | Li₆PS₅Cl | 0:1.6:0:98.4 |

### <Measurement of strength of solid electrolyte mixture sheet (Tensile test)>

The solid electrolyte mixture sheet was cut, whereby a strip-shaped test piece having a width of 4 mm was produced. A tensile tester (AGS-100NX, available from Shimadzu Corp.) was used to determine the strength of the test piece under the condition of 100 mm/min. The chuck distance was set to 30 mm. A displacement was applied to the test piece until breaking, and the maximum stress of the measured results was taken as the strength of each sample. The test was performed with N = 8.

The results were rated as follows:
○ (good): 0.1 N/mm² or more; and
× (poor): less than 0.1 N/mm². The numbers of samples rated ○ and × were counted.

The results are shown in Table 5.

### <Evaluation of flexibility of solid electrolyte mixture sheet (bending test)>

The solid electrolyte mixture sheets produced were cut, whereby test pieces having a width of 4 cm and a length of 10 cm were produced. The test pieces were then wrapped around a Φ10-mm round rod, and the test pieces were visually checked for damage such as scratches and cracks. When no damage was found, the test was conducted with an even thinner Φ5-mm round rod and the test pieces were checked for damage. When no damage was found again, the test was conducted with an even thinner Φ2-mm round rod and the test pieces were checked for damage. The results were classified from A to D.
A: No damage with Φ2-mm rod
B: Damaged with Φ2-mm rod
C: Damaged with Φ5-mm rod
D: Damaged with Φ10-mm rod

The results are shown in Table 5.

### <Ion conductivity of solid electrolyte mixture sheet>

The solid electrolyte mixture sheet was cut to an appropriate size, and gold was vapor-deposited on both sides of the resulting sheet. Then, the resulting solid electrolyte mixture sheet punched out to a Φ10 mm circle was placed in a pressure cell, the cell screws were tightened with 8 N, and the top and bottom of the cell were caused to function as electrodes. FIG. 1 shows a schematic cross-sectional view of the pressure cell used.

Using this sample, the ion conductivity was measured using an impedance measurement apparatus available from Toyo Corp. under the conditions including 25°C, an AC amplitude modulation of 10 mV, and a frequency of 5 × 10⁶ to 0.1 Hz.

The results are shown in Table 5.

**[Table 5]**

| | Strength | | Bending test | Ion conductivity (S/cm) |
|---|---|---|---|---|
| | ○ | × | | |
| Com parative Example 3 | 2 | 6 | D | 2.5 × 10⁻⁴ |
| Com parative Example 4 | 3 | 5 | D | 3.0 × 10⁻⁴ |
| Example 8 | 8 | 0 | B | 4.3 × 10⁻⁴ |
| Example 9 | 6 | 2 | B | 4.6 × 10⁻⁴ |
| Example 10 | 6 | 2 | C | 4.6 × 10⁻⁴ |
| Example 11 | 8 | 0 | C | 4.2 × 10⁻⁴ |
| Example 12 | 8 | 0 | C | 4.0 × 10⁻⁴ |
| Example 13 | 6 | 2 | B | 4.4 × 10-4 |
| Example 14 | 6 | 2 | B | 3.9 × 10⁻⁴ |

### REFERENCE SIGNS LIST

- 1:: screw
- 2:: nut
- 3:: insulating sheet
- 4:: solid electrolyte mixture sheet
- 5:: deposited gold
- 6:: upper electrode
- 7:: lower electrode

## Claims

1. A polytetrafluoroethylene composition for use in an electrochemical device binder, the polytetrafluoroethylene composition comprising
polytetrafluoroethylene containing polytetrafluoroethylene particles having a particle size of 1 µm or greater.

2. The polytetrafluoroethylene composition according to claim 1,
wherein the polytetrafluoroethylene containing polytetrafluoroethylene particles having a particle size of 1 µm or greater is contained in an amount of 1% by mass or more and 70% by mass or less in the polytetrafluoroethylene composition.

3. An electrochemical device binder consisting essentially of a polytetrafluoroethylene composition, the polytetrafluoroethylene composition comprising
polytetrafluoroethylene containing polytetrafluoroethylene particles having a particle size of 1 µm or greater.

4. The electrochemical device binder according to claim 3,
wherein the polytetrafluoroethylene containing polytetrafluoroethylene particles having a particle size of 1 µm or greater is non-melt-flowable polytetrafluoroethylene.

5. The electrochemical device binder according to claim 3 or 4,
wherein the polytetrafluoroethylene containing polytetrafluoroethylene particles having a particle size of 1 µm or greater is contained in an amount of 1% by mass or more and 70% by mass or less in the polytetrafluoroethylene composition.

6. The electrochemical device binder according to any one of claims 3 to 5,
wherein the polytetrafluoroethylene containing polytetrafluoroethylene particles having a particle size of 1 µm or greater is contained in an amount of 1% by mass or more and 50% by mass or less in the polytetrafluoroethylene composition.

7. A polytetrafluoroethylene composition for use in an electrochemical device binder, the polytetrafluoroethylene composition comprising
polytetrafluoroethylene having a specific surface area of 0.5 m²/g or more and less than 7.0 m²/g.

8. The polytetrafluoroethylene composition according to claim 7,
wherein the polytetrafluoroethylene composition comprises polytetrafluoroethylene having a specific surface area of 1.5 m²/g or more and 3.5 m²/g or less.

9. An electrochemical device binder consisting essentially of a polytetrafluoroethylene composition, the polytetrafluoroethylene composition comprising
polytetrafluoroethylene having a specific surface area of 0.5 m²/g or more and less than 7.0 m²/g.

10. The electrochemical device binder according to claim 9,
wherein the polytetrafluoroethylene having a specific surface area of 0.5 m²/g or more and less than 7.0 m²/g is non-melt-flowable polytetrafluoroethylene.

11. The electrochemical device binder according to claim 9 or 10,
wherein the polytetrafluoroethylene having a specific surface area of 0.5 m²/g or more and less than 7.0 m²/g is contained in an amount of 1% by mass or more and 70% by mass or less in the polytetrafluoroethylene composition.

12. The electrochemical device binder according to any one of claims 9 to 11,
wherein the polytetrafluoroethylene having a specific surface area of 0.5 m²/g or more and less than 7.0 m²/g is contained in an amount of 1% by mass or more and 50% by mass or less in the polytetrafluoroethylene composition.

13. The electrochemical device binder according to any one of claims 9 to 12,
wherein the polytetrafluoroethylene composition comprises polytetrafluoroethylene having a specific surface area of 1.5 m²/g or more and 3.5 m²/g or less.

14. A polytetrafluoroethylene composition for use in an electrochemical device binder, the polytetrafluoroethylene composition comprising
polytetrafluoroethylene obtained by suspension polymerization.

15. An electrochemical device binder consisting essentially of a polytetrafluoroethylene composition, the polytetrafluoroethylene composition comprising
polytetrafluoroethylene obtained by suspension polymerization.

16. The electrochemical device binder according to claim 15,
wherein the polytetrafluoroethylene obtained by suspension polymerization is non-melt-flowable polytetrafluoroethylene.

17. The electrochemical device binder according to claim 15 or 16,
wherein the polytetrafluoroethylene obtained by suspension polymerization is contained in an amount of 1% by mass or more and 70% by mass or less in the polytetrafluoroethylene composition.

18. The electrochemical device binder according to any one of claims 15 to 17,
wherein the polytetrafluoroethylene obtained by suspension polymerization is contained in an amount of 1% by mass or more and 50% by mass or less in the polytetrafluoroethylene composition.

19. The electrochemical device binder according to any one of claims 3 to 6, 9 to 13, and 15 to 18,
wherein the polytetrafluoroethylene composition has an endothermic peak temperature of 333°C or higher.

20. The electrochemical device binder according to any one of claims 3 to 6, 9 to 13, and 15 to 19,
wherein the polytetrafluoroethylene composition is in a powder form.

21. The electrochemical device binder according to any one of claims 3 to 6, 9 to 13, and 15 to 20,
wherein the polytetrafluoroethylene composition is substantially free from water.

22. The electrochemical device binder according to any one of claims 3 to 6, 9 to 13, and 15 to 21,
wherein the polytetrafluoroethylene composition is substantially free from a fluorine-containing compound having a molecular weight of 1000 or less.

23. An electrode mixture comprising:
an electrode active material; and
the polytetrafluoroethylene composition according to claim 1, 2, 7, 8, or 14 or the electrochemical device binder according to any one of claims 3 to 6, 9 to 13, and 15 to 22.

24. The electrode mixture according to claim 23, which is in a sheet form.

25. An electrode comprising:
an electrode active material;
a current collector; and
the polytetrafluoroethylene composition according to claim 1, 2, 7, 8, or 14 or the electrochemical device binder according to any one of claims 3 to 6, 9 to 13, and 15 to 22.

26. A secondary battery comprising
the electrode according to claim 25.
